(19) Europäisches Patentamt
European Patent Office
Office européen des brevets

(11) Numéro de publication: **0 268 509**
**B1**

# (12) FASCICULE DE BREVET EUROPEEN

(45) Date de publication du fascicule du brevet: **27.06.90**

(51) Int. Cl.⁵: **G01B 11/00**, B63B 39/14

(21) Numéro de dépôt: **87402308.8**

(22) Date de dépôt: **16.10.87**

(54) **Procédé et dispositif opto-électronique de mesure en temps réel de mouvements d'une structure solide soumise à l'effet d'un fluide.**

(30) Priorité: **20.10.86 FR 8614567**

(43) Date de publication de la demande:
**25.05.88 Bulletin 88/21**

(45) Mention de la délivrance du brevet:
**27.06.90 Bulletin 90/26**

(84) Etats contractants désignés:
**DE GB IT NL SE**

(56) Documents cités:
**BE-A- 893 699**
**DE-A- 2 947 347**
**DE-A- 3 428 983**
**FR-A- 2 147 250**
**FR-A- 2 511 917**

(73) Titulaire: **ETAT-FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées(FR)**

(72) Inventeur: **Le Guet, Pierre-Loic, 15, Avenue de la Mutualité, F-91440 Bures sur Yvette(FR)**
Inventeur: **Lempereur, Christine, 10, rue du 14 Juillet, F-31000 Toulouse(FR)**
Inventeur: **Mathe, Jean-Michel, 30, rue Iles Mariannes, F-31100 Toulouse(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 268 509 B1

ACTORUM AG

## Description

La présente invention a pour objet un procédé et un dispositif opto-électronique de mesure en temps réel des mouvements d'une structure solide mobile soumise à l'effet d'un fluide, telle qu'une maquette d'avion dans une soufflerie, une plate-forme de forage ou une maquette d'engin nautique placée dans un bassin d'essais. Dans la suite de la description, on considérera plus particulièrement ce dernier cas de structure flottante dans un bassin d'essais. La mesure de l'attitude de maquettes de bateaux en essais hydrodynamiques dans des bassins où il est possible de générer des houles d'amplitude et de fréquence variables est particulièrement importante pour prévoir le comportement du bateau dans des conditions réelles de navigation.

La mesure de l'attitude de maquettes s'effectue en général à l'aide d'un suiveur mécanique implanté à l'arrière du bateau. Ceci présente des inconvénients dans la mesure où il est toujours nécessaire de disposer d'un contact mécanique entre l'objet à étudier et le système métrologique.

La présente invention vise à supprimer tout contact mécanique entre la structure à étudier et le dispositif de mesure et à permettre la détermination en temps réel, et donc le suivi de l'évolution au cours du temps d'une part des coordonnées Xg, Yg, Zg du centre de gravité (ou barycentre) de la structure représentant dans le cas d'un bateau,respectivement le cavalement, l'embardée et le pilonnement du bateau par rapport à un repère fixe lié au bassin d'éssai, et d'autre part des angles $\theta$ de tangage ou assiette, $\Psi$ de roulis ou gite, et $\Psi$ de cap ou lacet du mouvement du solide autour de son centre de gravité.

Ces buts sont atteints grâce à un dispositif caractérisé en ce qu'il comprend au moins quatre taches lumineuses non alignées disposées de façon prédéterminée sur la structure flottante à surveiller, au moins deux caméras vidéo synchronisées dont la position est définie par rapport à un repère fixe et est déterminée de façon à placer dans le champ de vision commun des caméras un ensemble d'au moins trois taches lumineuses, chaque tache lumineuse présente des dimensions telles que, dans le plan image de chacune des caméras vidéo, l'image de chaque tache lumineuse soit interceptée par un nombre de lignes de balayage compris entre environ cinq et quinze, les signaux vidéo délivrés par les caméras vidéo sont appliqués à un dispositif de traitement comprenant des circuits analogiques d'extraction des signaux de synchronisation et d'acquisition des coordonnées image de points singuliers sur l'image dont la luminance est supérieure à un niveau prédéterminé, des circuits de comptage et de mémorisation des coordonnées et des longueurs de segments des taches lumineuses interceptées par des lignes de balayage de chacune des caméras vidéo, des circuits de commande et d'interface reliés à un calculateur pour déterminer les coordonnées image des barycentres des taches lumineuses dans le plan image d'une caméra, puis les coordonnées des barycentres des taches lumineuses par rapport à un repère fixe afin de déduire de leurs variations les trois mouvements de translation, et les trois mouvements de rotation de ladite structure.

Selon une application particulière, le dispositif comprend en outre des moyens de calcul des paramètres (cavalement x, embardée y, lacet ou cap $\Psi$,) définissant la trajectoire de la structure flottante et des moyens d'asservissement en position de la trajectoire de la structure flottante par comparaison des paramètres mesurés avec une consigne.

Le dispositif selon l'invention permet de mesurer avec une bonne précision, et sans liaison mécanique contraignante avec la structure flottante à étudier, les attitudes de cette structure en mouvement soumise à l'action de la houle, du vent ou du courant.

L'utilisation d'un système stéréoscopique avec deux caméras permet en outre de mesurer des déformations du corps observé ou d'assurer un pilotage de navires afin d'effectuer la comparaison de leurs qualités nautiques.

L'invention concerne encore un procédé opto-électronique de mesure en temps réel des mouvements d'une structure solide mobile soumise à l'effet d'un fluide dans un espace à trois dimensions,
caractérisé en ce qu'il consiste à :

a) placer en des positions prédéterminées de la structure à observer au moins quatre taches lumineuses non alignées,

b) positionner au voisinage de la structure à observer au moins deux caméras synchronisées à axes de visée concourants de telle manière que les champs de vision des caméras comprennent au moins trois taches lumineuses communes et que chaque tache lumineuse présente des dimensions telles que, dans le plan image de chacune des caméras vidéo, l'image de chaque tache lumineuse soit interceptée par un nombre de lignes de balayage compris entre environ cinq et quinze,

c) détecter parmi les signaux vidéo délivrés par les deux caméras vidéo les signaux de synchronisation et les signaux de luminance dont la valeur est supérieure à un niveau prédéterminé,

d) compter et mémoriser les coordonnées X,Y et les longueurs de segments DX des taches lumineuses interceptées par des lignes de balayage de chacune des caméras vidéo,

e) calculer dans le plan image de chaque caméra les coordonnées image du barycentre de chaque tache lumineuse détectée à partir des coordonnées X,Y et des longueurs DX des segments de chaque tache lumineuse détectée, puis les coordonnées 3D de chacune des taches lumineuses dans un repère fixe OXYZ à partir des coordonnées image du barycentre de chaque tache lumineuse, et déduire des variations des coordonnées 3D de chacune des taches lumineuses dans un repère fixe OXYZ les trois mouvements de translation et les trois mouvements de rotation de la structure.

D'autres caractéristiques et avantages de l'invention ressortiront de la description suivante de modes particuliers de réalisation donnés à titre d'exemples, en référence aux dessins annexés, sur lesquels :

- la figure 1 est une vue schématique en perspective montrant l'ensemble d'un dispositif opto-électronique selon l'invention avec les caméras vidéo de prise de vue et les dispositifs de traitement,
- la figure 2 est une vue schématique d'une tache lumineuse vue dans le plan image d'une caméra vidéo,
- la figure 3 est un organigramme montrant les étapes essentielles d'un traitement avec le dispositif selon l'invention,
- la figure 4 est une vue de dessus d'un exemple d'agencement de taches lumineuses sur une structure à étudier,
- la figure 5 est une vue schématique en perspective d'un exemple de disposition des plans image des deux caméras vidéo par rapport à l'ensemble des sources lumineuses,
- la figure 6 est une vue schématique en élévation de l'ensemble du dispositif de mesure installé dans un bassin d'essais,
- la figure 7 est une vue en perspective d'un exemple de structure d'étalonnage,
- la figure 8 représente des chronogrammes correspondant à différents signaux élaborés à partir des signaux vidéo fournis par les caméras,
- la figure 9 est une représentation schématique d'un signal de luminance,
- la figure 10 représente le schéma d'un exemple de circuits de traitement analogique des signaux vidéo fournis par une caméra vidéo,
- la figure 11 représente le schéma d'un exemple de circuits de comptage et de mémorisation recevant les signaux délivrés par les circuits de la figure 10,
- la figure 12 représente le schéma de circuits de commande et d'interface coopérant avec un calculateur et les circuits de la figure 11,
- la figure 13 représente le schéma de l'ensemble des circuits électroniques associés à deux caméras vidéo de vision stéréoscopique,
- la figure 14 est une vue de dessus d'une maquette pouvant être pilotée par le dispositif selon l'invention, et
- la figure 15 est un schéma synoptique du système de pilotage d'une maquette coopérant avec un dispositif opto-électronique de mesure selon l'invention.

On voit sur la figure 1 une structure solide 1, telle qu'une maquette de bateau ou engin nautique, flottant dans un bassin d'essais au-dessus duquel sont disposées deux caméras vidéo 11, 12 placées à poste fixe de telle manière que leur champ de vision englobe des taches lumineuses 71, 72, 73, 74 disposées sur la structure 1 en des emplacements prédéterminés. On a représenté pour la caméra vidéo 11 le plan image Pi1 et le centre $S_1$ de pupille de l'objectif de la caméra.

Les caméras 11, 12 peuvent être constituées par des caméras à tube analyseur d'image ou, de préférence, par des caméras à photodiodes telles que des caméras CCD. A titre d'exemple, on a utilisé des caméras CCD dont la résolution est de 384 éléments par ligne sur 576 lignes, la dimension des photo-éléments étant de 12µm × 12µm. De telles caméras peuvent fonctionner avec une fréquence trame maximale de 90 Hz.

Les signaux vidéo délivrés par les deux caméras synchronisées 11, 12 sont appliqués à un dispositif de traitement et de calcul 9 qui comprend un calculateur 5 et des circuits d'interface assurant l'acquisition et le traitement des signaux vidéo délivrés par les caméras 11, 12. Ces circuits d'interface comprennent des circuits de traitement analogique 2 qui incluent des circuits d'extraction de signaux de synchronisation et d'acquisition de points singuliers de l'image afin de prendre en compte les images des sources lumineuses 71, 72, 73, 74. Des circuits 3 de comptage et de mémorisation élaborent les coordonnées et les longueurs de segments des différentes taches lumineuses repérées dans les plans image des caméras 11, 12. Enfin, des circuits 4 d'interface proprement dite et de commande assurent les liaisons par les bus 6 entre les circuits de comptage 3 et le calculateur 5. Les circuits 4 d'interface comprennent notamment une horloge et des circuits tampons.

La figure 2 montre l'image 7 d'une tache lumineuse 71, 72 73 ou 74, vue dans le plan image d'une caméra 11 ou 12. Comme on peut le constater, l'image 7 de la tache lumineuse est interceptée par plusieurs lignes de balayage $Y_1$ à $Y_7$.

La dimension des taches lumineuses 71, 72, 73, 74 et la localisation des caméras 11, 12 par rapport à la structure 1 sont telles que l'image 7 de chaque tache 71, 72, 73, 74 dans le plan de la cible photosensible de chaque caméra 11, 12 intercepte entre environ cinq et quinze lignes de balayage de la caméra. Les circuits de traitement analogique associés aux compteurs 3 procèdent alors à l'identification des coordonnées x, y de chaque segment lumineux de l'image 7 d'une tache dans le plan image d'une caméra, et à la détermination de la longueur Dx de chaque segment lumineux composant l'image de la tache. On voit par

exemple sur la figure 2 l'image 7 d'une tache lumineuse constituée par un ensemble de sept segments de différentes longueurs constitués par les portions de lignes de balayage qui interceptent l'image 7 de la tache lumineuse.

Le dispositif de traitement de signaux vidéo et le calculateur 5 coopèrent pour déterminer le barycentre de l'image 7 de chaque tache lumineuse 71, 72, 73 observée par une caméra 11 ou 12, ce qui augmente de façon significative la précision de la localisation des taches lumineuses.

Un logiciel d'acquisition des points singuliers est chargé de restituer en temps réel le barycentre des taches lumineuses identifiant l'objet à suivre. Ici, le terme temps réel signifie que le résultat doit être obtenu dans un délai de 16,6 ms (ce qui correspond à une fréquence trame de 60Hz).

Pour chaque particule, l'information est contenue par exemple dans une table de 32 octets. Celle-ci contient sur les deux premiers mots, le numéro de la trame courante, l'ordonnée Yo du premier (suivant le sens de balayage ligne) segment lumineux composant la particule, le nombre de segments lumineux qui définissent la particule. Les quatorze mots restant servent à définir précisément la géométrie de la tache; on y trouve l'abscisse Xi de détection de chaque segment ainsi que leur longueur DXi. Les taches lumineuses sont donc assujetties à intercepter au plus 14 lignes de la matrice de la caméra.

Après avoir calculé le barycentre du polygone décrivant la tache, l'information utile est contenue dans dix octets. Les coordonnées-image du barycentre sont stockées sur deux fois quatre octets et le numéro de trame sur deux octets. Ainsi, si le système travaille effectivement en temps réel, on est capable, à capacité mémoire égale, de sauvegarder au moins trois fois plus d'informations.

Le logiciel qui traite les triplets d'informations (X,Y,DX) est structuré de la manière suivante :

Après une étape de début 51 et une phase d'initialisation 52 au cours de laquelle s'effectuent les réglages de seuils, un noyau 53 (scheduler) organise la répartition des taches en fonction des événements extérieurs à savoir la présence d'informations dans l'interface 4 ou la présence de particules à traiter.

Un logiciel d'acquisition et de tri, 54 et un programme de calcul du barycentre 55 sont commandés par le noyau 53.

Le noyau 53 teste deux variables. Si une information est disponible dans l'interface, la procédure d'acquisition et de tri 52 est appelée. Dans le cas contraire, il vient tester si les tables de triplets sont pleines (étape 56) et si oui la procédure de calcul du barycentre 55 est activée.

La procédure 52 d'acquisition et de tri dont l'organigramme est représenté sur les tableaux I et II, lit dans l'interface le triplet X,Y, DX. Elle vérifie alors si ce segment appartient à une particule déjà répertoriée dans la trame courante. La recherche est effectuée en fonction des valeurs X et Y; si, sur la ligne précédente (Y-1), il existe un segment tel que

$X - p < X < X + p$

(Y-1)(Y)(Y-1)

où p est une longueur paramétrée,

alors, les informations X et DX sont sauvegardées dans la table correspondant à la particule, et l'index NB est incrémenté.

Dans le cas contraire, une nouvelle table est allouée, correspondant à la rencontre de la particule. L'adresse de cette table est obtenue par un tableau d'adresses contenant 1024 points d'entrée. X, Y,DX sont stockés dans cette table et l'index NB est initialisé à 1.

La procédure de calcul du barycentre est représentée sur le tableau III. Elle gère un index qui indique l'adresse de la prochaine table à traiter. Le calcul du barycentre est alors effectué et sauvegardé dans une table de résultats dont la dimension est de 128 Ko.

Une fois terminées les phases d'étalonnage et d'acquisition des coordonnées image des taches lumineuses, il est possible de déterminer les coordonnées 3D de chacune des taches lumineuses dans un repère fixe, puis les angles de rotation de la structure à étudier.

Le dispositif opto-électronique selon l'invention vise à permettre de calculer de façon précise par rapport à un repère fixe lié à la plate-forme d'essais, les coordonnées Xg, Yg, Zg du centre de gravité G de la structure flottante 1 à observer.

Pour cela, au moins deux caméras vidéo 11, 12 sont utilisées de manière à observer la structure flottante 1 selon deux axes de visée différents, qui, de préférence, forment entre eux un angle de 90°. Les caméras 11, 12 sont disposées de manière à incorporer chacune dans leur champ de visée au moins trois taches lumineuses communes 71, 72, 73 disposées sur la structure à étudier 1. De la sorte, le dispositif effectue une visée stéréoscopique et, à parti coordonnées-image de chacune des taches lumineuses fournies par chacune des caméras il est possible de déterminer l'ensemble des mouvements de la structure flottante.

Afin d'améliorer la précision des mesures, une certaine redondance est possible et le nombre de taches lumineuses placées dans le champ de chaque caméra peut être égal à quatre ou cinq. Un mode de réalisation avantageux est constitué par un ensemble de quatre taches lumineuses 71 à 74 placées dans le champ de visée de chacune des caméras 11, 12 pour réaliser une vision totalement stéréoscopique. Dans ce cas, trois des taches lumineuses 71 à 73 peuvent être placées sur la face supérieure de l'objet flottant 1 (fig 1) tandis que la quatrième tache 74 est placée à une certaine hauteur au-dessus des autres taches 71, 72, 73. Les caméras 11, 12 sont alors placées de façon à "plonger" sur l'objet 1. Ce mode de réalisation assure une fiabilité des mesures sans que le nombre d'informations à prendre en compte soit excessif.

Comme on l'a représenté sur la figure 4, le nombre de taches lumineuses placées sur la structure flottante 1 peut être égal à cinq. Dans ce cas, les taches 71 à 75 peuvent alors être réparties sur les deux branches d'un V, l'une des taches 73 constituant le sommet du V et les taches définissant deux séries de trois taches alignées 71,72, 73 et 73, 74, 75.

La figure 5 représente encore un autre mode de réalisation à visée semi-stéréoscopique. Selon cette configuration sept taches lumineuses 71 à 77 sont réparties de manière à former deux V, trois des taches lumineuses 73,74, 75 constituant un alignement qui est commun aux deux V et se trouve placé dans le champ de chacune des deux caméras 11, 12, dont les plans image sont $Pi_1$ et $Pi_2$. Il y a donc vision stéréoscopique pour les trois taches 73 à 75 et vision monoscopique pour les couples de taches 71, 72 et 76, 77 qui ne sont placés que dans le champ d'une seule caméra 11 ou 12 respectivement. Sur la figure 5, $S_1$ et $S_2$ représentent respectivement le centre de pupille de l'objectif de chacune des caméras 11, 12. Le mode de réalisation de la figure 5 reste cependant plus complexe que celui de la figure 1 qui ne met en oeuvre que quatre taches lumineuses 71 à 74, et le rendu tridimensionnel d'un objet peut être effectué de façon précise à l'aide de quatre sources lumineuses placées sur l'objet, dès lors que deux capteurs optiques 11, 12 sont utilisés.

La figure 6 montre schématiquement un bassin d'essais avec une plate-forme fixe 13, un plan d'eau 14 sur lequel est placée une structure flottante 1 à étudier, et un chariot 10 portant les caméras 11, 12 ainsi que le système d'acquisition de données associé aux caméras 11, 12. Le chariot 10 est positionné de telle manière que les taches lumineuses 71, 72, 73, 74 restent dans le champ des caméras 11, 12, même en présence de houle. Le dispositif de mesure permet ainsi de suivre les évolutions de la maquette 1 en permanence et de déterminer ses trois mouvements de translation et ses trois mouvements de rotation.

Pour la détermination des mouvements d'une maquette 1, par rapport à un repère fixe OXYZ, il est naturellement nécessaire que non seulement les positions des taches lumineuses 71 à 74 sur la maquette 1 soient bien déterminées au préalable, mais également que tous les paramètres relatifs aux conditions de prise de vue soient bien connus. Pour cela, il suffit de procéder à un étalonnage à l'aide d'une structure amovible 8 qui peut être positionnée de façon déterminée par rapport à un repère fixe OXYZ lié au bassin d'essais, et qui comporte un ensemble de taches lumineuses 81 à 89 dont les positions sont elles-mêmes connues au sein de la structure fixe 8 d'étalonnage. Les taches lumineuses 81 à 89, qui sont de préférence au nombre de cinq à quinze, sont réparties dans au moins deux plans différents de façon à permettre un étalonnage pour tout l'espace où ensuite les taches lumineuses 71 à 74 d'une maquette seront susceptibles de se trouver par suite des mouvements de la maquette. Une fois l'étalonnage terminé, la structure amovible 8 est retirée et les caméras 11,12 restent dans la position qu'elles occupaient pendant l'étalonnage pour observer un objet 1 à étudier qui est placé dans le bassin dans la zone où la structure d'étalonnage 8 avait été préalablement disposée. Grâce à l'étalonnage, tous les paramètres nécessaires pour le calcul de la position du centre de gravité de l'objet 1 dans le repère fixe OXYZ à partir des coordonnées image des taches lumineuses 71 à 74 dans les plans image des caméras 11, 12, sont bien déterminés. Comme on l'a représenté sur la figure 7, la structure d'étalonnage 8 peut être formée d'un simple réseau de barres horizontales et verticales sur lesquelles sont placées les taches lumineuses.

Les taches lumineuses 81 à 89 servant à l'étalonnage sont de même nature que les taches 71 à 74 servant aux mesures et peuvent être réalisées de différentes manières. Ainsi, les taches lumineuses peuvent être formées à partir d'ensembles de diodes électroluminescentes, ou à partir de sources telles que des lampes à incandescence. Les taches lumineuses peuvent aussi être de simples réflecteurs éclairés par des projecteurs 70 placés en dehors du champ de vision des caméras.

On décrira maintenant les différents circuits de mesure en référence aux figures 1 et 8 à 13.

Les deux caméras vidéo 11 et 12 doivent travailler en synchronisme. La caméra 11 peut ainsi constituer une caméra "maître" tandis que la caméra 12 fonctionne en "esclave" et reçoit de la caméra 11 les signaux de synchronisation trame ST et ligne SL ainsi que l'horloge qui donne la fréquence point (fréquence d'analyse des cellules photo-sensibles).

Comme on l'a représenté sur la figure 13,le système électronique de mesure comprend essentiellement quatre blocs principaux, dont deux sont communs aux deux voies et deux sont dupliqués pour chacune des voies de mesure, ce qui constitue au total six modules.

Une horloge 4' fournit les coordonnées-image des points analysés. Elle détecte également la parité de la trame et assure la remise à zéro du système en début de l'acquisition qui commence toujours par une trame impaire.

Un séquenceur 4" génère les différents signaux de commande vers les modules constituant les deux voies de la chaîne de mesure. L'horloge 4' et le séquenceur 4" sont communs aux deux voies de mesure.

Les modules de mesure 2', 2" sont identiques pour les deux caméras. Ils donnent les coordonnées-image de l'origine de chaque segment lumineux ainsi que sa longueur.

Les modules 3', 3" présents dans chacune des voies de mesure assurent la mémorisation temporaire des informations (qui peuvent être codées sur deux mots de 16 bits) ainsi que le transfert sur le calculateur.

Les signaux de synchronisation trame ST et ligne SL, un signal de reconnaissance de parité de trame STP et un signal de référence noir, peuvent être obtenus à l'aide d'un dispositif de traitement analogique 2 tel que celui qui a été représenté sur la figure 10, à partir des signaux vidéo composites fournis par les caméras 11, 12.

La forme des signaux vidéo composites B est représentée sur la figure 8 en fonction des numéros des lignes 1 à 625 indiqués sur l'échelle A. Un exemple de circuit 21 d'extraction de signaux de synchronisation ligne SL a été représenté sur la figure 10 et comprend un transistor PNP 213 qui est saturé lors de l'apparition des signaux de synchronisation. Les signaux vidéo sont appliqués, par l'intermédiaire d'un condensateur de liaison 210, sur la base du transistor 213 qui est polarisée par des résistances 211, 212. L'émetteur du transistor 213 est relié à l'alimentation par le montage parallèle d'une résistance 214 et d'un condensateur 215 tandis que le collecteur du transistor 213 est relié d'une part à la masse par une résistance 216 et d'autre part à la base d'un second transistor 218 par une résistance 217. Le signal de synchronisation ligne SL est délivré sur l'émetteur du second transistor 218 relié à la masse par une résistance 219.

Le signal de synchronisation trame ST et un signal de parité de trame STP peuvent être élaborés dans un circuit tel que le circuit 22 de la figure 10 qui reconnait la différence des formats de synchronisation de trame paire et impaire.

Pour la détection du signal de synchronisation trame, un circuit monostable redéclenchable 220 est activé sur chaque front descendant du signal de synchronisation. Si aucun nouveau déclenchement n'est généré avant 42 ms, c'est-à-dire les 2/3 de la durée d'une ligne, le monostable 220 revient dans son état stable. Par contre, et c'est le cas lors de la synchro-trame, si les signaux de synchro-ligne sont présents au milieu de la ligne, il y aura occurrence du signal alors que le monostable n'est pas revenu au repos. Cet évènement sera mémorisé dans une bascule 221 de type D. La forme des signaux C et D en sortie des circuits 220 et 221 est représentée sur la figure 8.

Le dispositif de reconnaissance de la parité de la trame fonctionne sur le même principe. Lors de l'apparition de la synchro-trame, un monostable 222 dont la durée est 8 lignes est déclenché. Lorsque le monostable 222 repasse à zéro, le niveau du signal de synchronisation trame est prélevé et mémorisé dans une bascule 223. Ce niveau de signal est représentatif de la parité, un niveau logique 1 correspondant à une trame impaire.

Le signal de suppression présent dans le signal vidéo composite définit le niveau du noir n4. Il permet de s'affranchir de la luminosité moyenne. Le circuit composé des éléments 230 à 233 de la figure 10 permet de sauvegarder la tension de référence noir dans une mémoire analogique, la durée d'échantillonnage étant de 5ms. La tension de référence noire est ensuite enlevée au signal luminance à l'aide d'un soustracteur réalisé à partir d'un amplificateur analogique de bande passante supérieure à 5MHz constitué par un amplificateur opérationnel 244 et des résistances 241, 242, 243 et 245.

Deux circuits comparateurs rapides 246,247 fournissent des signaux FM et FD correspondant au franchissement de seuils SHI de niveau n1 et SB de niveau n2 lors de la croissance et de la décroissance du signal vidéo (Fig 9). Les signaux de seuil SHI et SB sont programmés par le calculateur. Ils peuvent être codés par exemple sur 5 bits et convertis par un convertisseur numérique-analogique. Un additionneur analogique peut ajouter au signal vidéo composite issu de la caméra une tension qui permet de visualiser en surveillance sur le moniteur de contrôle les points dont la luminance est supérieure au seuil FM. Ceci facilite le réglage des seuils.

Une caractéristique essentielle du dispositif de traitement selon l'invention réside dans l'acquisition de points singuliers sur l'image, lesquels points singuliers sont constitués par des taches lumineuses qui présentent une certaine surface pour intercepter plusieurs lignes de balayage et, d'une trame à l'autre, se situent dans des zones localisées du champ de vision des caméras.

Lors de l'analyse de l'image fournie par les caméras, la recherche des taches lumineuses pourra donc avantageusement être limitée à certaines zones dépendant de la localisation des taches dans la trame précédente.

La reconnaissance des taches lumineuses implique d'une manière générale l'acquisition des coordonnées-image des points dont la luminance est supérieure à un seuil ou correspond à une teinte particulière. Dès que l'amplitude du signal luminance devient supérieure à un seuil montant n1, les coordonnées image (x,y) du début du segment lumineux intercepté par le balayage sont mémorisées. Le comptage de la longueur dx du segment se poursuit tant que l'amplitude du signal reste supérieure à un niveau H qui est programmable et peut être un peu différent de n1, par exemple légèrement inférieur à n1. Le triplet d'informations (x,y,dx) décrivant la tache lumineuse est transmis vers le calculateur lorsque l'amplitude du signal vidéo devient inférieure à un second niveau n2 qui est inférieur à n1 et à H.

La figure 11 montre les circuits de comptage et de mémorisation des coordonnées et des longueurs de segments des différentes taches lumineuses. Le signal de synchro-trame initialise le compteur Y 311 à une valeur Yo inscrite dans un registre 310, qui constitue un paramètre dépendant du standard de la caméra. Le compteur 311 est ensuite incrémenté à chaque synchro-ligne. Le passage à zéro du compteur 311 indique que la ligne balayée est la première ligne porteuse d'informations (dans la mesure où il y a rejection des lignes synchro-trame).

De manière identique, un compteur X 321 est initialisé à la valeur Xo inscrite dans un registre 320, lors de l'apparition du signal de synchro-ligne. Le compteur 321 est incrémenté par une horloge synchronisée avec les caméras. La valeur de Xo est choisie de telle manière que lors du passage à zéro du compteur 321 le signal vidéo composite contienne un signal luminance.

La mémorisation du contenu des compteurs 311 et 321 dans les registres tampons 312,322 est réalisée dès l'apparition du signal FM. Ce signal FM valide également le comptage d'une longueur de segment dx

pour le compteur 331 qui est incrémenté et dont le contenu est transféré dans le registre tampon 332 à l'apparition du signal FD si dx est supérieur ou égal à une longueur de référence. Les circuits de mémorisation 312,322, 332 délivrant leurs informations sur un bus unique 6 à travers des circuits trois états 313, 323, 333.

Les circuits d'interface 4 entre d'une part les circuits de mesure et de comptage 2, 3 et d'autre part, le calculateur 5 génèrent à partir des signaux FD et FM les différents signaux de commande nécessaires au prélèvement des mesures. Une représentation schématique de ces circuits de commande et d'interface apparait sur la figure 12.

Sur l'occurrence du signal FM, un compteur 42, 43 de réjection des parasites est validé et incrémenté à la fréquence horloge. Ce dispositif assure l'inhibition des transferts si la longueur de segment est inférieure à une certaine longueur paramétrée. Si la particule est validée lors de l'apparition du signal FD, les contenus des registres temporaires 312, 322, 332 correspondant aux compteurs 311, 321, 331 sont transférés dans une pile du type FIFO (premier entré-premier sorti) implantée sur la carte interface 4 par multiplexage.

Un système d'inhibition 45 initialisé par le calculateur 5 permet d'inhiber les acquisitions de particules pendant une durée variable après l'acquisition d'un segment lumineux. Le circuit d'inhibition 45 est ainsi relié à une entrée d'une porte ET dont l'une des entrées reçoit le signal FM et une troisième entrée reçoit un signal d'un séquenceur de transfert 47. La logique de commande est réalisée de manière à inhiber les transferts si la détection de la luminance (FM actif) a lieu avant que le comptage sur ligne n'ait commencé (x<o). Elle procède de manière identique si FD apparait alors que l'information luminance a disparu en fin de ligne. Cette procédure assure la réjection des particules situées à cheval sur les frontière de la zone observée. Sur la figure 12 les circuits 44 et 46 représentent des bascules.

La présente invention est applicable au guidage de maquettes ou autres engins flottants, tel que le bateau 1 de la figure 14 vu de dessus par deux caméras 11, 12 et comportant quatre taches lumineuses 71 à 74.

Dans ce cas, le dispositif 91 de mesure des mouvements de la maquette 1 calcule également en temps réel la vitesse d'abattée et élabore au sein d'une chaîne d'asservissement 92 la commande nécessaire concernant l'angle de barre qui est à ajuster (fig 15).

Les valeurs mesurées des paramètres x (cavalement), y (embardée) et Ψ (cap) définissant la trajectoire de la structure flottante sont parées au niveau du soustracteur 93 à des valeurs de consigne Xo, Yo, Ψo. Les signaux d'erreur sont alors appliqués à une chaîne d'asservissement 94 du type PID qui délivre notamment un signal représentatif de l'angle de barre qui sera envoyé par une liaison série vers l'organe de pilotage.

Dans les applications au pilotage d'engins, les caméras vidéo 11, 12 peuvent être déplacées selon une direction connue par rapport au repère fixe OXYZ.

Les logiciels d'exploitation du dispositif de mesure d'attitudes d'objet seront décrits brièvement ci-dessous.

Des programmes assurent en premier lieu le dialogue avec le système de mesure. Il s'agit par exemple de :

- la procédure INIT : elle permet de communiquer au système de mesure la valeur des seuils qui conditionnent l'acquisition des segments lumineux.
- la procédure ACQ : elle réalise l'acquisition et le tri des segments lumineux, calcule le barycentre des particules.

Ces procédures sont écrites en langage Assembleur, pour permettre de travailler en temps réel par rapport à la durée de lecture d'une trame (généralement 1/50 s).

Ces programmes de gestion de l'acquisition seront représentés sous forme d'organigrammes dans les tableaux annexés.

Des programmes assurent par ailleurs le traitement des données brutes de l'acquisition :

Il s'agit notamment des programmes effectuant le calcul des coordonnées tridimensionnelles à partir des coordonnées-image et des coefficients d'étalonnage, et le calcul de restitution des angles d'attitude (roulis, tangage, lacet) de la maquette.

Le programme AC d'acquisition des taches lumineuses écrit en langage Pascal assure la gestion de la séquence d'acquisition des points lumineux. Il appelle des procédures écrites en Assembleur qui permettent le dialogue avec l'interface matérielle.

Dans un premier temps, l'opérateur doit régler le seuillage de manière à n'apercevoir sur l'écran du moniteur de contrôle que les taches lumineuses placées sur la maquette (procédure INIT).

L'acquisition proprement dite (procédure ACQ) est ensuite déclenchée; elle s'arrête lorsque npt particules sont acquises. (Ce volume total d'informations est fourni par l'opérateur).

En fin d'acquisition, les données sont en mémoire centrale du calculateur; le programme permet de lire ces résultats, d'effectuer des calculs complémentaires, et de sauvegarder l'information utile sous la forme d'un numéro de trame (ntr), d'un nombre de particules dans cette trame (np), et de coordonnées-image (xg, yg) dans deux fichiers f_acq1 et f_acq2 chacun affecté à une caméra.

L'organigramme du logiciel d'acquisition AC est présenté dans le tableau I.

La fonction de réglage des conditions de seuillage est réalisée dans la procédure INIT d'initialisation écrite en Assembleur et appelée par le programme de gestion de l'acquisition précédemment défini (AC)

(étape 52 de la figure 3).

L'opérateur a la possibilité de choisir le niveau de luminance n1 à partir duquel l'acquisition d'un segment lumineux peut être déclenchée. Cette valeur, comprise entre 0 et 64, dépend des conditions d'éclairage ambiant et de l'ouverture de l'objectif.

D'autre part, il est possible de choisir un nombre minimal de pels au dessous duquel un segment lumineux ne sera pas acquis. Cela permet de s'affranchir de petites surbrillances dues à des réflexions parasites, ou bien à des pels défectueux du capteur CCD.

La procédure ACQ d'acquisition des segments lumineux (écrite également en langage Assembleur) ne doit être appelée que lorsque les seuils sont correctement réglés (dans la procédure INIT). Elle lit au niveau de l'interface les deux mots contenant l'information sur les coordonnées initiales du segment lumineux, sa longueur, et le numéro de la caméra.

Une fois cette information acquise, il s'agit de chercher si le segment appartient ou non à une nouvelle particule, et de sauvegarder le triplet (x,y,dx) dans une table indexée par le numéro de la particule et le numéro de la caméra qui l'a "vu". Cette procédure est décrite plus loin sous le nom de TRI.

Le logiciel scrute en permanence l'interface, pour savoir s'il y a ou non présence d'une particule. Lorsqu'il n'y a pas d'information à prélever, le programme s'oriente vers le calcul du barycentre d'une particule acquise au plus tôt pendant la trame précédente, ceci pour éviter que des calculs soient effectués sur des taches qui ne sont pas encore totalement définies.

Ce programme sauvegarde l'information utile en mémoire centrale du calculateur. Chaque 128 ko de mémoire permet de stocker les données relatives à 2000 trames consécutives contenant trois particules. La durée d'acquisition correspondante à 60 Hz est de l'ordre de 35 s.

L'accroissement de la capacité mémoire du calculateur jusqu'à 1 Mo permet donc d'envisager des durées d'esssais voisines de 280 secondes.

Le compactage d'informations réalisé grâce au calcul du barycentre en temps réel est très appréciable; à capacité mémoire égale, la durée d'un essai se trouve multipliée par un facteur 6.

L'organigramme général de la procédure d'acquisition ACQ est représenté dans le tableau II. Les fonctions de Tri et calcul du barycentre (CDG) sont explicitées dans les organigrammes des tableaux III et IV.

Le calcul des coordonnées 3D représentant les mouvements de la structure consiste lui-même en la simple résolution d'un système de quatre équations linéaires à trois inconnues, à partir des coordonnées-image et des coefficients d'étalonnage, lorsque le dispositif utilise deux caméras observants en vision stéréo une structure portant quatre taches lumineuses.

## TABLEAU I

### ORGANIGRAMME DU LOGICIEL D'ACQUISITION (Pascal)

Nom du programme: AC

Nom des variables utilisées dans l'organigramme:

```
npt    : nombre total de particules à acquérir,
fm     : front montant=seuil de luminance à partir duquel on débute
         l'acquisition d'un segment lumineux,
fd     : front  descendant = seuil  de luminance qui  déclenche  le
         transfert du triplet (X,Y,DX),
ntr    : numéro de trame,
np     : nombre de particules par trame,
f_acq(i)  : fichier d'acquisition relatif à la caméra n°i,
ad     : adresse absolue du segment de résultats relatif à  chaque
         caméra,
adsx   : adresse relative par rapport à ad de la table contenant sx
adsy   :                         "                                sy
ads    :                         "                                s
adntr  :                         "                                ntr
adnp   :                         "                                np
nex    : nombre de  segments de 128 Ko de mémoire  disponibles pour
         le stockage des résultats,
npi    : nombre  de particules traitées,
```

TABLEAU I (Suite)

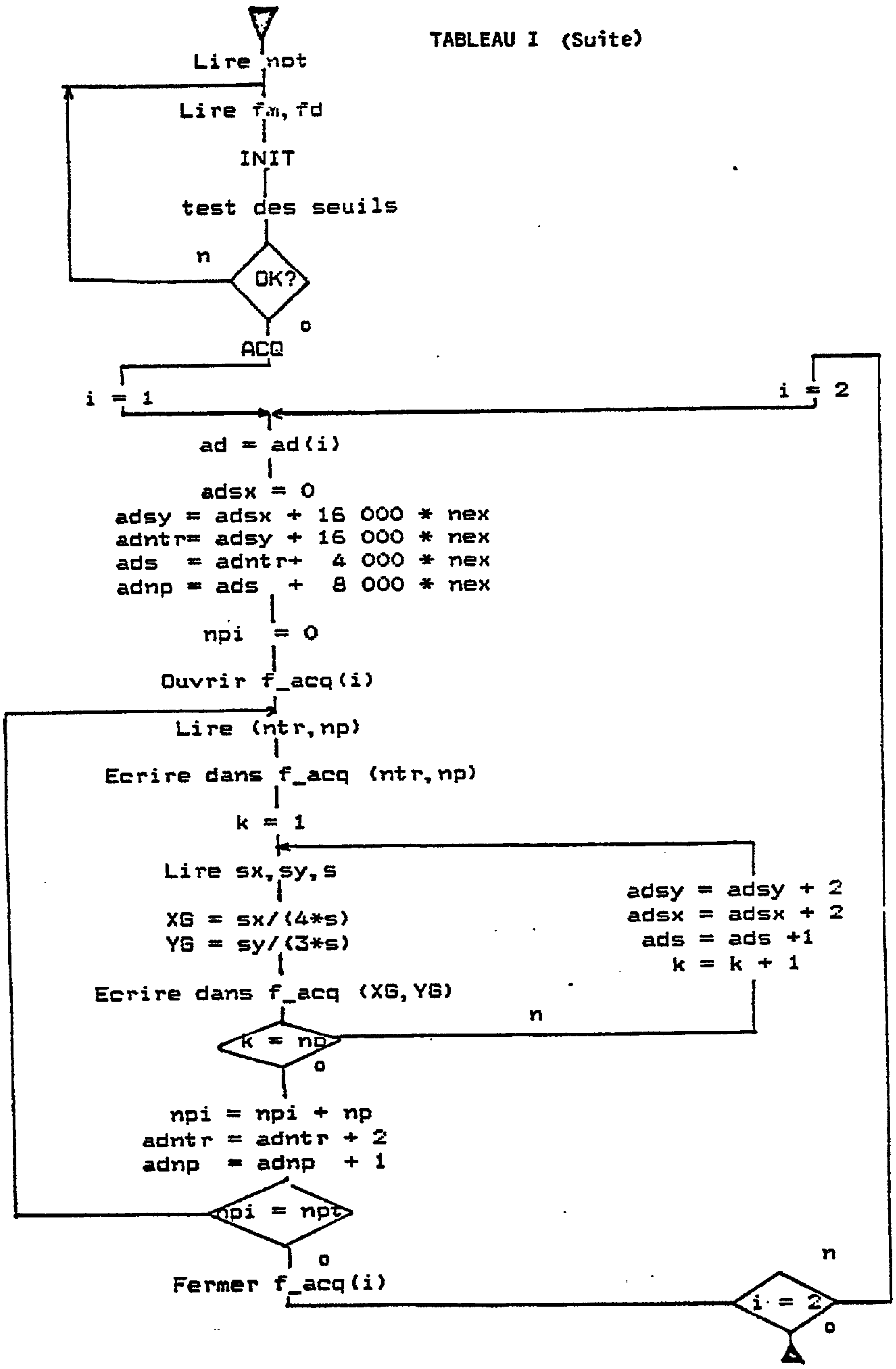

ORGANIGRAMME DE LA PROCEDURE ACQ

Nom des variables utilisées:

npt :nombre total de particules à acquérir
np1,np2:nombre de particules restant à traiter pour la caméra n°i
ncam :numéro de caméra
f1 :indicateur permettant de savoir s'il faut effectuer les calculs relatifs à la caméra n°1 ou à la caméra n°2
dt1,dt2:différences entre le nombre de particules acquises au début de la trame courante et le nombre de particules dont le centre a été calculé.

Nom des "procédures" citées dont l'organigramme est donné plus loin:

TRI1,TRI2: effectuent les tests d'appartenance à une tache de chaque segment lumineux et l'affectent dans une table d'acquisition.

CDG1,CDG2: calculent le barycentre des taches lumineuses

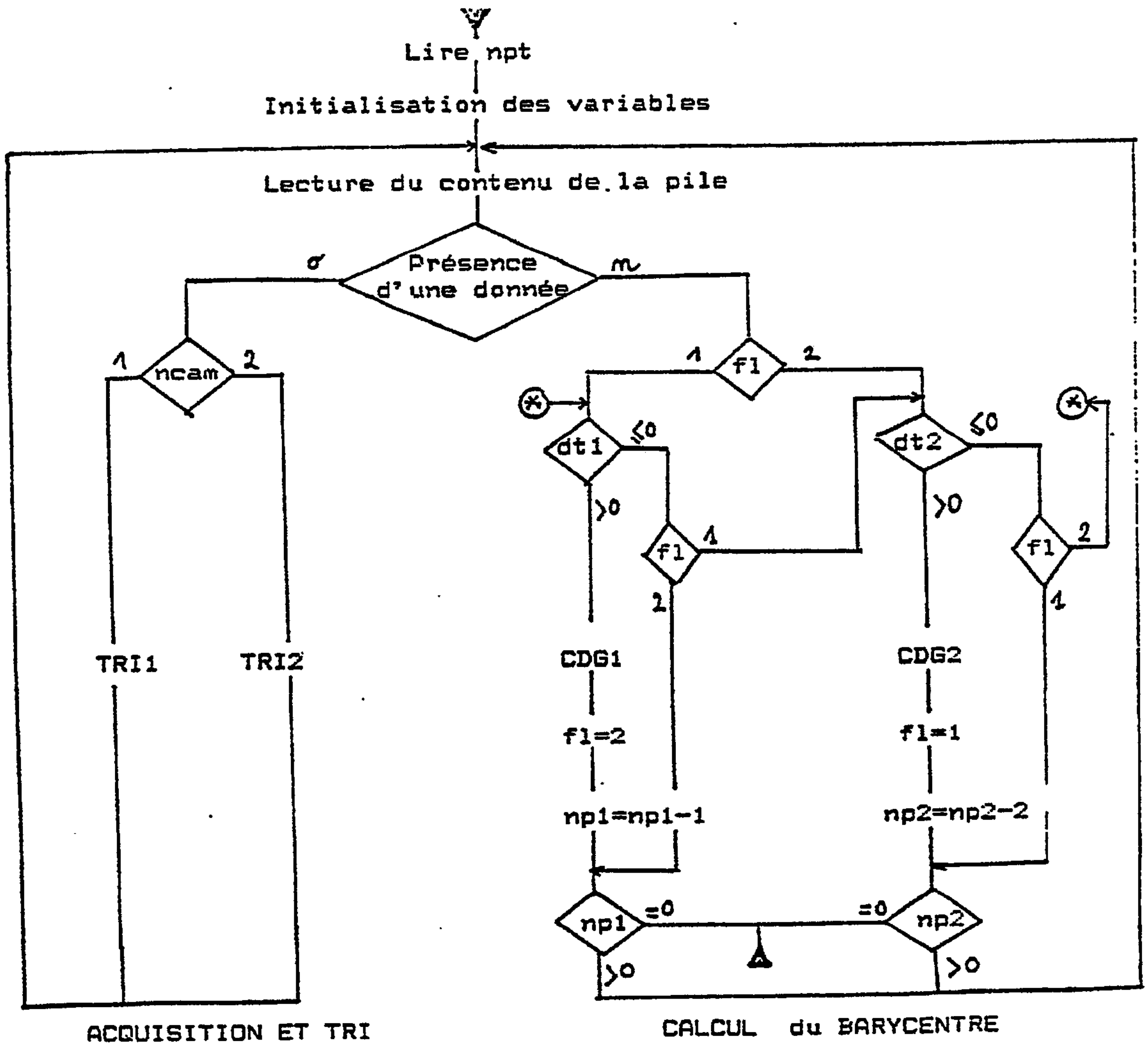


TABLEAU III

ORGANIGRAMME DE LA PROCEDURE DE CALCUL DU BARYCENTRE (CDG)

Nom des variables utilisées:

nbs :nombre de segments composant une particule
nmin :nombre minimal de segments pour que la particule soit validée (permet l'élimination des points parasites).
X, Y :coordonnées initiales du segment
DX :longueur du segment
XG, YG:coordonnées du barycentre
ptr :pointeur dans la table d'acquisition
sx, sy, ddx, s:variables intermédiaires

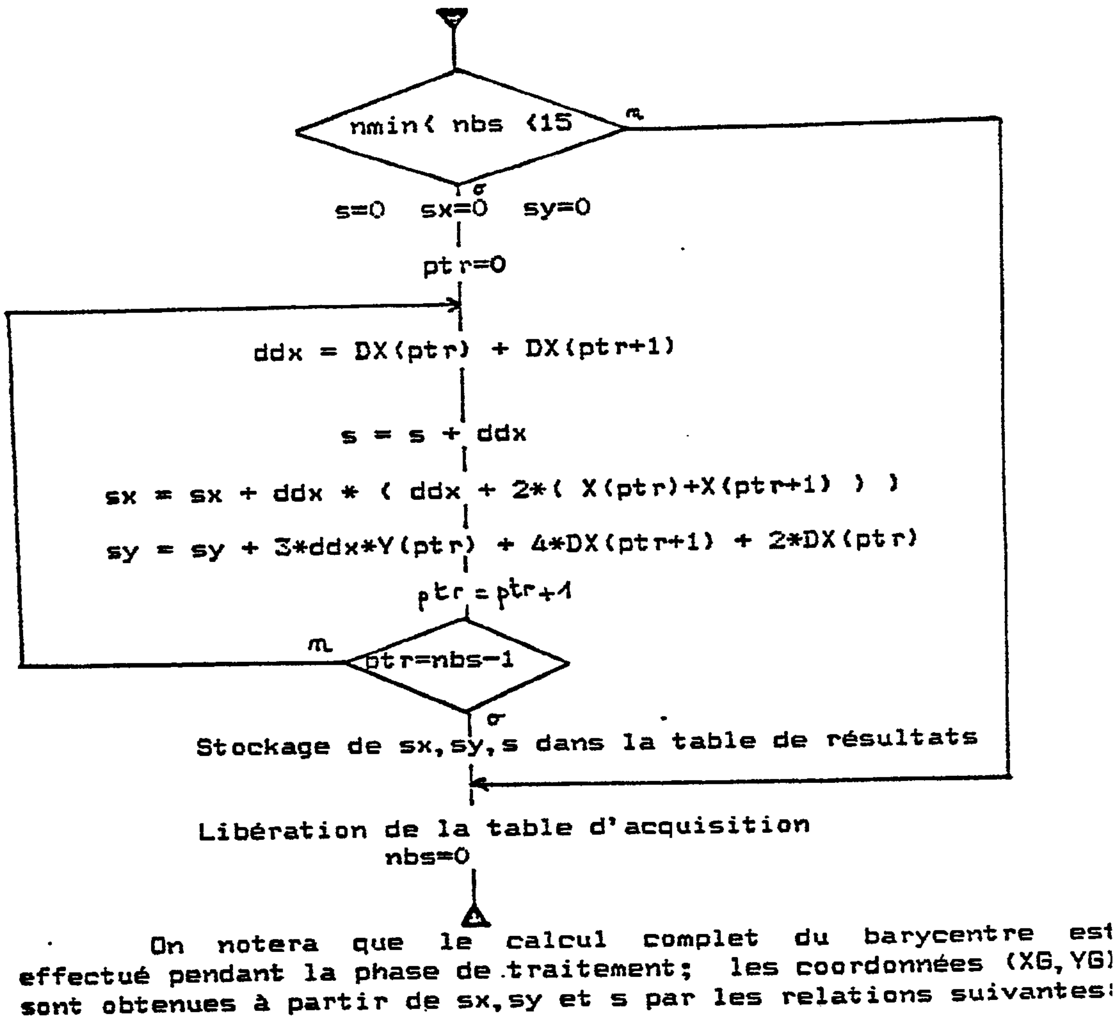


On notera que le calcul complet du barycentre est effectué pendant la phase de traitement; les coordonnées (XG, YG) sont obtenues à partir de sx, sy et s par les relations suivantes:

$$XG = sx/(4*s)$$

$$YG = sy/(3*s)$$

ORGANIGRAMME DU LOGICIEL DE TRI (Assembleur)

Nom des variables utilisées:

| | |
|---|---|
| x, y, dx | :coordonnées initiales et longueur d'un segment lumineux, |
| cpttr | :compteur de trame, |
| np | :nombre de segments sur la ligne courante, |
| nps | :nombre de segments sur la ligne précédente, |
| ys | :ordonnée de la dernière ligne sur laquelle un segment a été détecté, |
| yp | :ordonnée du dernier segment acquis, |
| itab | :compteur de particules, |
| itabt | :nombre de particules acquises au début de la trame courante, |
| nbr | :nombre de segments dans une particule, |
| cpt | :compteur sur nps, |
| xp | :tableau des abscisses de début de segment sur la ligne courante, |
| xs | :tableau des abscisses de début de segment sur la ligne précédente, |

suite de l'organigramme:→ Test d'appartenance à une particule

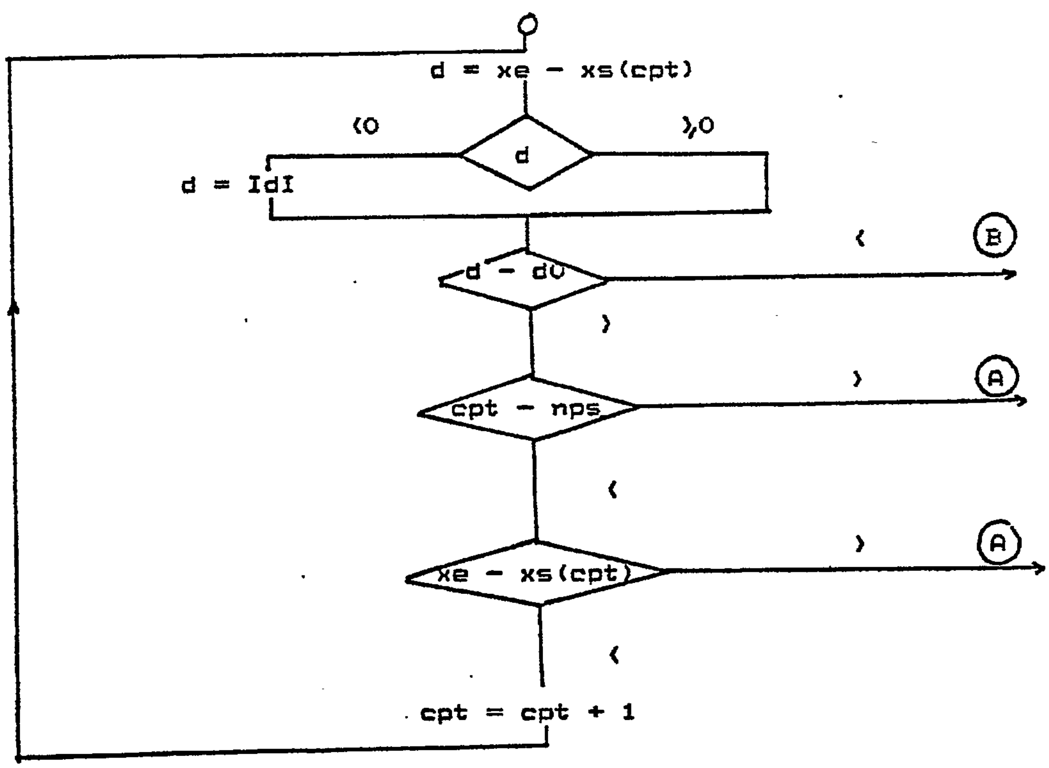

TABLEAU IV (Suite)

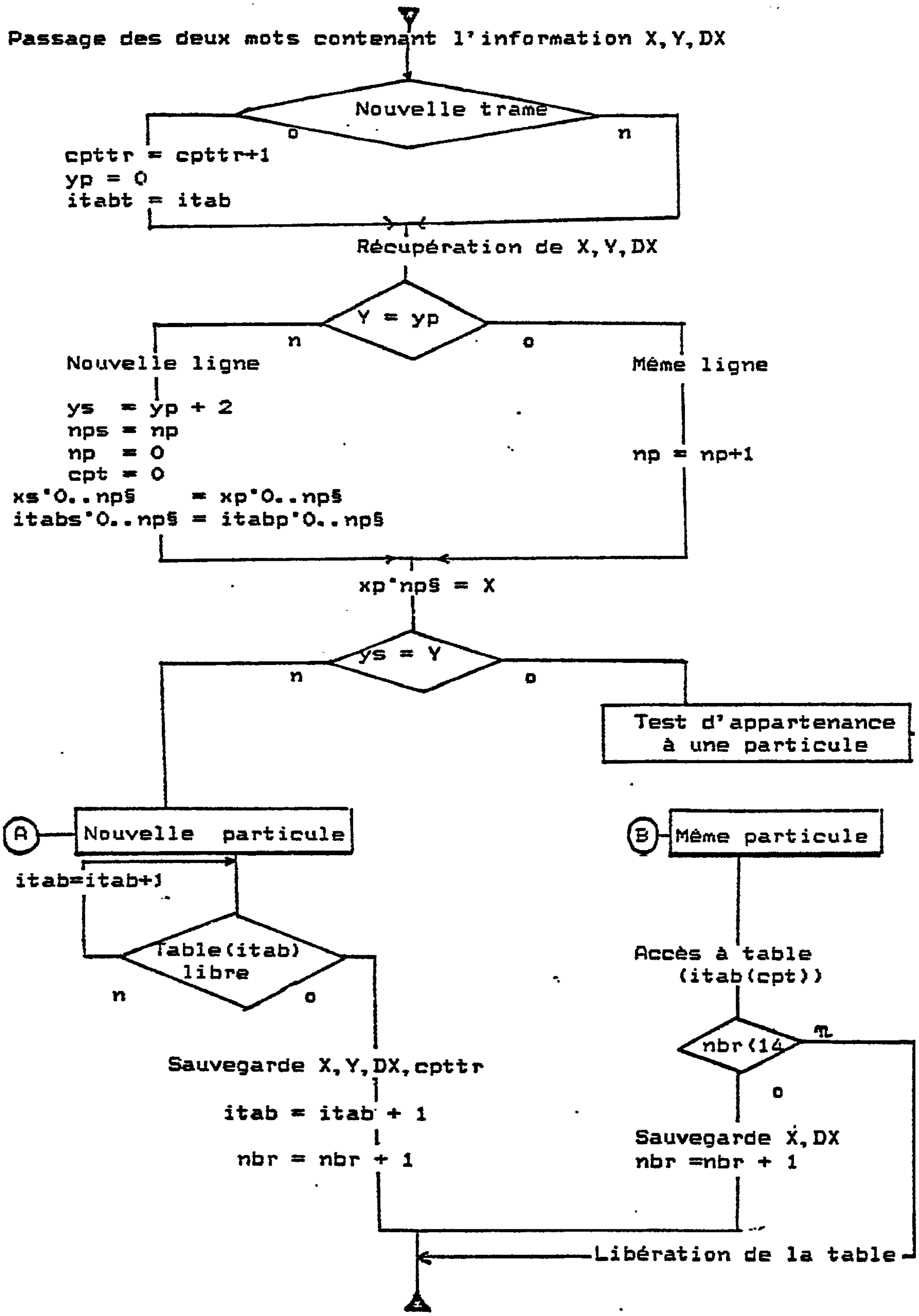

## Revendications

1. Dispositif opto-électronique de mesure en temps réel des mouvements d'une structure solide mobile soumise à l'effet d'un fluide,
caractérisé en ce qu'il comprend au moins quatre taches lumineuses non alignées (71 à 75) disposées de façon prédéterminée sur la structure (1) à surveiller, au moins deux caméras vidéo (11,12) synchronisées dont la position est définie par rapport à un repère fixe (OXYZ) et est déterminée de façon à placer dans le champ de vision commun des caméras (11, 12) un ensemble d'au moins trois taches lumineuses (73, 74, 75), en ce que chaque tache lumineuse présente des dimensions telles que, dans le plan image de chacune des caméras vidéo (11, 12), l'image (7) de chaque tache lumineuse soit interceptée par un nombre de lignes de balayage (Y1 à Y7) compris entre cinq et quinze, en ce que les signaux vidéo délivrés par les caméras vidéo (11,12) sont appliqués à un dispositif de traitement comprenant des circuits analogiques (2) d'extraction des signaux de synchronisation et d'acquisition des coordonnées image de points singuliers sur l'image dont la luminance est supérieure à un niveau prédéterminés ($n_1$,), des circuits (3) de comptage et de mémorisation des coordonnées (X, Y) et des longueurs de segments (Dx) des taches lumineuses interceptées par des lignes de balayage de chacune des caméras vidéo (11, 12), des circuits (4) de commande et d'interface reliés à un calculateur (5) qui détermine les coordonnées image des barycentres des taches lumineuses (71 à 75) dans le plan image d'une caméra (11, 12), puis les coordonnées des barycentres des taches lumineuses par rapport à un repère fixe (OXYZ) et qui déduit de leurs variations les trois mouvements de translation et les trois mouvements de rotation de ladite structure.

2. Dispositif selon la revendication 1, caractérisé en ce qu'il comprend cinq taches lumineuses (71 à 75) coplanaires réparties en forme de V sur la structure flottante selon deux directions concourantes en définissant deux groupes de trois taches alignées (71, 72, 73; 73, 74, 75) présentant une tache commune.

3. Dispositif selon la revendication 1, caractérisé en ce qu'il comprend quatre taches lumineuses (71, 72, 73, 74) non alignées réparties sur la structure flottante (1), trois des taches lumineuses étant situées dans un même plan.

4. Dispositif selon l'une quelçonque des revendications 1 à 3, caractérisé en ce que les deux caméras vidéo (11, 12) présentent en permanence des plans image disposés à environ 90° l'un de l'autre.

5. Dispositif selon l'une quelconque des revendications 1 à 4, caractérisé en ce qu'il comprend en outre une structure rigide d'étalonnage amovible (8) sur laquelle sont placées en des positions géométriques bien déterminées par rapport à un repère fixe OXYZ au moins une dizaine de taches lumineuses (81 à 89) réparties dans au moins deux plans différents, et des moyens d'ajustement de la position des caméras vidéo (11, 12) par rapport à la structure rigide d'étalonnage (8).

6. Dispositif selon l'une quelconque des revendications 1 à 5, caractérisé en ce que l'acquisition des mesures à partir des signaux analogiques fournis par les caméras vidéo (11, 12) est effectuée à une fréquence de l'ordre de 60 Hz.

7. Dispositif selon l'une quelconque des revendications 1 à 6, caractérisé en ce qu'il comprend des moyens pour inhiber l'acquisition des mesures à partir des signaux analogiques fournis par les caméras vidéo (11, 12) pour des zones des images formées par les caméras vidéo (11, 12) dans lesquelles la présence de taches lumineuses est exclue.

8. Dispositif selon l'une quelconque des revendications 1 à 7, caractérisé en ce que les caméras vidéo (11, 12) sont déplaçables selon une direction connue par rapport au repère fixe (OXYZ).

9. Dispositif selon l'une quelconque des revendications 1 à 8, caractérisé en ce qu'il comprend en outre des moyens de calcul des paramètres(tels que cavalement x, embardée y, lacet ou cap $\Psi$) définissant la trajectoire de la structure flottante (1) et des moyens d'asservissement en position de la trajectoire de la structure flottante par comparaison des paramètres mesurés ($x, y, \Psi$) avec une consigne ($x_o$, $y_o$, $\Psi_o$).

10. Dispositif selon la revendication 9, caractérisé en ce que la fréquence des moyens d'asservissement est inférieure à la fréquence d'acquisition des mesures et de l'ordre de 10 Hz.

11. Dispositif selon l'une quelconque des revendications 1 à 10, caractérisé en ce que les taches lumineuses (71 à 75; 81 à 89) sont constituées par des réflecteurs en forme de disque éclairés par des projecteurs (70) situés au voisinage des caméras vidéo (11,12).

12. Procédé opto-électronique de mesure en temps réel des mouvements d'une structure solide mobile soumise à l'effet d'un fluide dans un espace à trois dimensions,
caractérisé en ce qu'il consiste à :

a) placer en des positions prédéterminées de la structure (1) à observer au moins quatre taches lumineuses (71 à 75) non alignées,

b) positionner au voisinage de la structure (1) à observer au moins deux caméras (11, 12) synchronisées à axes de visée concourants de telle manière que les champs de vision des caméras (11, 12) comprennent au moins trois taches lumineuses communes et que chaque tache lumineuse présente des dimensions telles que, dans le plan image de chacune des caméras vidéo (11, 12), l'image (7) de çhaque tache lumineuse soit interceptée par un nombre de lignes de balayage (Y1 àY7) compris entre cinq et quinze,

c) détecter parmi les signaux vidéo délivrés par les deux caméras vidéo (11, 12) les signaux de synchronisation et les signaux de luminance dont la valeur est supérieure à un niveau prédéterminé ($n_1$),
d) compter et mémoriser les coordonnées (X,Y) et les longueurs de segments (DX) des taches lumineuses interceptées par des lignes de balayage de chacune des caméras vidéo (11,12),
e) calculer dans le plan image de chaque caméra les coordonnées image du barycentre de chaque tache lumineuse détectée (7) à partir des coordonnées (X,Y) et des longueurs (DX) des segments de chaque tache lumineuse détectée (7), puis les coordonnées 3D de chacune des taches lumineuses dans un repère fixe (OXYZ) à partir des coordonnées image du barycentre de chaque tache lumineuse, et déduire des variations des coordonnées 3D de chacune des taches lumineuses dans un repère fixe (OXYZ) les trois mouvements de translation et les trois mouvements de rotation de la structure.

13. Procédé selon la revendication 12, caractérisé en ce que l'on procède au préalable à un étalonnage des caméras (11, 12) en observant des taches lumineuses (81 à 89) disposées dans des positions fixes par rapport à un repère fixe (OXYZ).

## Patentansprüche

1. Optoelektronische Vorrichtung für die Echtzeit-Messung der Bewegungen einer der Wirkung eines Fluides ausgesetzten beweglichen festen Struktur, dadurch gekennzeichnet, daß sie aus mindestens vier nicht-gereihten auf der Struktur (1) entsprechend angeordneten Lichtflecken (71 bis 75) sowie aus mindestens zwei synchronisierten Video-Kameras (11, 12) besteht, deren Position gegenüber einem festen Bezugspunkt (0XYZ) sowie deren Anordnung fesgelegt ist, damit sich ein Satz von mindestens drei Lichtflecken (73, 74, 75) im gemeinsamen Sichtfeld der beiden Video-Kameras (11, 12) befindet, daß die Abmessung eines jeden Lichtfleckes entsprechend gewählt wird, damit das Bild (7) der einzelnen Lichtflecke in der Bildebene jeder Video-Kamera (11, 12) durch fünf bis fünfzehn Bildzeilen (Y1 bis Y7) abgetastet wird, daß die von den Video-Kameras (11, 12) erzeugten Videosignale einem Verarbeitungskreis angelegt werden, der aus analogen Schaltkreisen (2) für das Auslesen der Erfassungs- und Synchronisierungssignale der Bildkoordinaten von besonderen Punkten des Bildes, deren Leuchtdichte über einem vorbestimmen Pegel ($n_1$) liegt, aus Schaltkreisen für die Zählung bzw. Speicherung der Koordinaten (X, Y) und der Längen (Dx) der Segmente der von den Bildzeilen jeder Video-Kamera (11, 12) abgetasteten Lichtflecke sowie aus mit einem Rechner (5) verbundenen Steuer- und Schnittstellenschaltkreisen (4) besteht, wobei der Rechner die Bildkoordinaten der Schwerpunkte der Lichtflecke (71 bis 75) in der Bildebene einer Kamera (11, 12) und dann die Koordinaten der Lichtfleck-Schwerpunkte, auf den Bezugspunkt (0XYZ) ermittelt, um aus deren Veränderungen die drei Dreh- bzw. Verschiebungsbewegungen der untersuchten Struktur zu ermitteln.

2. Vorrichtung nach Anspruch 1, dadurch gekennzeichnet, daß sie fünf koplanara Lichtflecke (71 bis 75) aufweist, die auf der schwebenden Struktur in V-Anordnung nach zwei durch den selben Punkt gehenden Richtungen verteilt sind, wobei somit zwei Gruppen dreier gereihter Lichtflecke (71, 72, 73; 73, 74, 75) mit einem gemeinsamen Lichtfleck (73) gebildet werden.

3. Vorrichtung nach Anspruch 1, dadurch gekennzeichnet, daß sie fünf auf der schwebenden Struktur ungerichtet verteilten Lichtflecke (71, 72, 73, 74, 75) aufweist, wobei drei dieser Lichtflecke in der selben Ebene liegen.

4. Vorrichtung nach einem beliebigen Anspruch 1 bis 3, dadurch gekennzeichnet, daß die beiden Video-Kameras (11, 12) stetig zwei rechtwinklich zueinander gerichtete Bildebenen aufweisen.

5. Vorrichtung nach einem beliebigen Anspruch 1 bis 4, dadurch gekennzeichnet, daß sie außerdem aus einer abnehmbaren starren Eichungsstruktur (8), auf welcher mindestens neun Lichtflecke (81 bis 89) auf mindestens zwei Ebenen nach, auf einen festen Bezugspunkt (0XYZ) bezogenen, festgelegten, geometrischen Positionen verteilt sind, sowie aus Mitteln zur auf die starre Eichungsstruktur (8) bezogenen Einstellung der Lage der Video-Kameras (11, 12) besteht.

6. Vorrichtung nach einem beliebigen Anspruch 1 bis 5, dadurch gekennzeichnet, daß die Erfassung der Meßdaten aus den von den Video-Kameras (11, 12) ermittelten analogen Signalen mit einer Abtastfrequenz von ca. 60 Hz erfolgt.

7. Vorrichtung nach einem beliebigen Anspruch 1 bis 6, dadurch gekennzeichnet, daß sie aus entsprechenden Mitteln besteht, zur Unterdrückung der Meßdaten-Erfassung aus durch die Video-Kameras (11, 12) ermittelten analogen Signalen für Bildebenenzonen der beiden Video-Kameras (11, 12), in welcher das Vorhandensein von Lichtflecken ausgeschlossen ist.

8. Vorrichtung nach einem beliebigen Anspruch 1 bis 7, dadurch gekennzeichnet, daß die Video-Kameras (11, 21) in einer bekannten Richtung gegenüber dem festen Bezugspunkt (0XYZ) bewegbar sind.

9. Vorrichtung nach einem beliebigen Anspruch 1 bis 8, daduch gekennzeichnet, daß sie außerdem aus Mitteln für die Berechnung von Parametern (wie Stampfen x, Gieren y, Schlingern oder Kurs $\psi$) zur Festlegung der Bahn der schwebenden Struktur (1) sowie aus Mitteln zur Lagesteuerung der Bahn der schwebenden Struktur durch Vergleich der gemessenen Paramatern (x, y, $\psi$) mit einer Anweisung ($x_0$, $y_0$, $\psi_0$) besteht.

10. Vorrichtung nach Anspruch 9, dadurch gekennzeichnet, daß die Frequenz der Steuermittel geringer als die Erfassungsfrequenz der Meßdaten ist und um 10 Hz liegt.

11. Vorrichtung nach einem beliebigen Anspruch 1 bis 10, dadurch gekennzeichnet, daß die Lichtflecke (71 bis 75; 81 bis 89) aus scheibenförmigen Reflektoren bestehen, die durch in unmittelbarer Nähe der Video-Kameras (11, 12) angeordnete Scheinwerfern (70) beleuchtet werden.

12. Optoelektronisches Verfahren zur Echtzeit-Messung in einem dreidimensionalen Raumsystem der Bewegungen einer den Auswirkungen eines Fluides ausgesetzten beweglichen starren Struktur, dadurch gekennzeichnet, daß es aus folgenden Vorgängen besteht, zwar

a) aus der vorbestimmten Positionierung und der Beobachtung auf der Struktur von mindestens vier ungereihten Lichtflecken (71 bis 75),

b) aus der Anordnung in unmittelbarer Nähe der zu beobachtenden Struktur von mindestens zwei Video-Kameras (11, 12) in der Weise, daß die Sichtfelder der Kameras (11, 12) mindestens drei gemeinsame Lichtflecke gleichzeitig abtasten und daß die Abmessungen eines jeden Lichtfleckes entsprechend festgelegt werden, damit das Bild der einzelnen Lichtflecke in der Bildebene jeder Video-Kamera (11, 12) durch fünf bis fünfzehn Bildzeilen (Y1 bis Y7) abgetastet wird,

c) aus der Erfassung unter den von beiden Video-Kameras (11, 12) ermittelten Video-Signalen der alleinigen Synchronisierungs- bzw. Leuchtstärkesignale, deren Wert über einem vorbestimmten Pegel ($n_1$) liegt,

d) aus der Zählung und Speicherung der Koordinaten (X, Y) und der Segmentlängen (Dx) der von der Zeilenabtastung jeder Video-Kamera (11, 12) erfaßten Lichtflecke,

e) aus der Berechnung in der Bildebene jeder Kamera der Schwerpunktkoordinaten der einzelnen erfaßten Lichtflecke (7) anhand der Koordinaten (X, Y) und der Segmentlängen (Dx) jedes einzelnen erfaßten Lichtfleckes und anschließend der 3D-Koordinaten der Lichtflecke in einem festen Bezugssystem (0XYZ) anhand der Bildkoordinaten des Schwerpunktes der einzelnen Lichtflecke und schließlich aus der Ermittlung anhand der Veränderungen der 3D-Koordinaten jedes einzelnen Lichtfleckes der Verschiebungsbewegungen bzw. der drei Drehbewegungen der Struktur.

13. Verfahren nach Anspruch 12, dadurch gekennzeichnet, daß vorher eine Eichung der Kameras (11, 12) durch Beobachtung von gegenüber einem festen Bezugspunkt (0XYZ) festangeordneten Lichtflecken (81 bis 89) vorgenommen wird.

**Claims**

1. An electro-optical means of performing real time measurement of the motion of a mobile, rigid structure under the influence of a fluid, wherein said means comprises at least four bright spots (71–75) at predetermined unaligned positoins on the structure (1) under study, at least two synchronized video cameras (11, 12) whose positions are defined in a fixed frame of reference (0XYZ) and are such that at least three (73, 74, 75) of the said bright spots lie within the common field of view of both said cameras, wherein the dimensions of each bright spot are such that the image (7) of each spot intercepts approximately five to fifteen scanning lines in the focal plane of each video camera, wherein the video signals provided by said cameras are supplied to a processing device (2) comprising a number of analog circuits capable of extracting the synchronization signals and acquiring the image coordinates of singular points whose brightness is above a preset level ($n_1$), wherein the said processing unit further comprises counter and memory circuits to count and record the coordinates and the lengths of the scan line segments intercepted by the said bright spots in each said camera, control and interface circuits connected to a computer (5) to determine the image coordinates of the barycenters of the said bright spots (71–75) in the focal plane of each camera, following which the barycenter coordinates of the bright spots are defined with respect to a fixed frame (0XYZ) of reference to derive the three translational and three rotational motions of the said structure from the variation of the said barycenter coordinates.

2. The device of claim 1, wherein it comprises five bright spots (71–75) in a single plane arranged on the floating structure in two concurrent directions in the shape of a Vee, with each arm of the said Vee having two groups of three aligned bright spots (71, 72, 73; 73, 74, 75) and one spot in common.

3. The device of claim 1, wherein it comprises four nonaligned bright spots (71–74) arranged on the floating structure (1), whereby three bright spots are arranged in the same plane.

4. The device of any claim 1 to 3, wherein the focal planes of said video cameras are arranged at a fixed angle to 90° to one another.

5. The device of any claim 1 to 4, wherein it furthermore comprises a removable rigid calibration structure (8) on which at least ten bright spots are arranged at predetermined geometric positions with respect to a fixed point in at least two different planes, whereby means are provided to adjust the positions of the two video cameras with respect to the rigid calibration structure.

6. The device according to any claim 1 to 5, wherein the acquisition of measurements derived from analog signals provided by said video cameras is carried out at a frequency of about 60 Hz.

7. The device of any claim 1 to 6 wherein it comprises means for inhibiting the acquisition of measurements derived from analog signals provided by said video cameras where bright spots are not present.

8. The device of any claim 1 to 7, wherein said video cameras can be moved in a known direction with respect to the fixed point.

9. The device of any claim 1 to 8, wherein it further comprises a means of calculating parameters such as the forward motion x, yaw y and heading $\psi$ defining the trajectory of the floating structure, as well as

position servo mechanisms for maintaining the course of the said floating structure (s, y, ψ) according to preset values ($x_0$, $y_0$, $\psi_0$).

10. The device of claim 9, wherein the frequency of the control means is lower than the measurement acquisition frequency, and is about 10 Hz.

11. The device of to any claim 1 to 10, wherein the bright spots (71–75; 81–89) comprise disk-shaped reflectors illuminated by projectors (70) located in the vicinity of the video cameras (11, 12).

12. An electro-optical method of real time measurement of the motion of a mobile rigid structure under the influence of a fluid in three-dimensional space, wherein this measurement consists of:

a) placing at least four nonaligned bright spots (71–75) at predetermined positons with respect to the structure under study,

b) positoining at least two synchronized cameras (11, 12) in the vicinity of the said structure (1), wherein the lines of sight of these cameras are aligned so that the field of view of each camera includes at least three common bright spots, and the dimensions of each bright spot are such that the image (7) of each spot is by approximately five to fifteen scanning lines (Y1–Y7) in the focal plane of each video camera,

c) detecting, in the video signals supplied by the two cameras, the synchronization signals indicating brightness at a level exceeding a given predetermined value $n_1$,

d) counting and memorizing the X, Y) coordinates and the lengths of the scanning line segments (DX) intercepting the said bright spots in each video camera.

e) calculating the image coordinates, in the focal plane of each camera, of the barycenter of each bright spot detected, using the (X, Y) coordinates and the lengths (DX) of the scanning line segments intercepted by each bright spot (7) detected, and then the three-dimensional (3D) coordinates of each said bright spot in a fixed frame of reference, using the image coordinates of the barycenter of each bright spot, for the purpose of finding the three translational and three rotational motions of the structure from the variations of the three-dimensional coordinates of each bright spot in the fixed frame of reference.

13. The method of claim 12, wherein the two cameras (11, 12) are calibrated in advance by observation of the bright spots (81–89) arranged at fixed positions with respect to a fixed frame of reference (0XYZ).

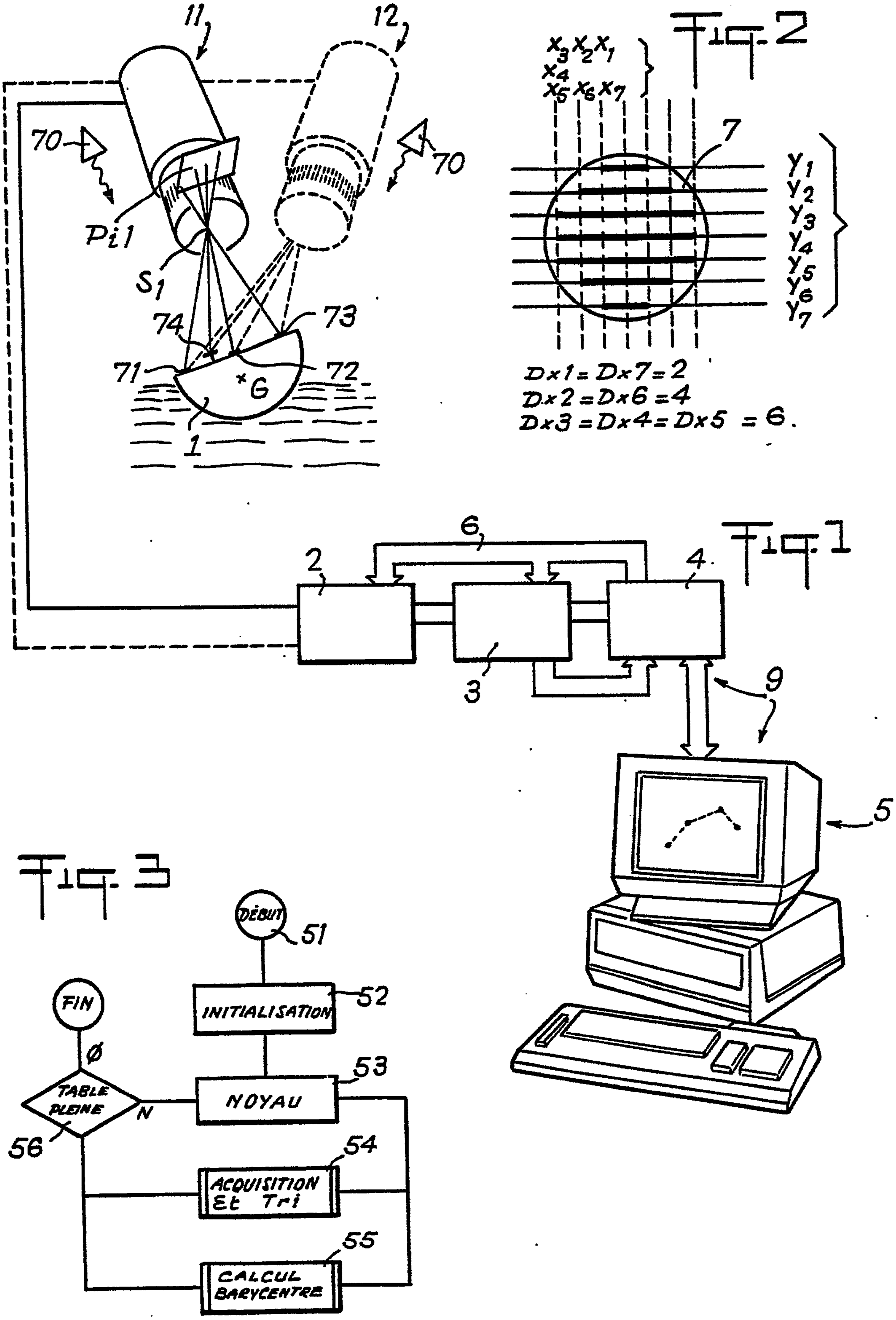


Fig. 2

Fig. 1

Fig. 3

Fig. 4

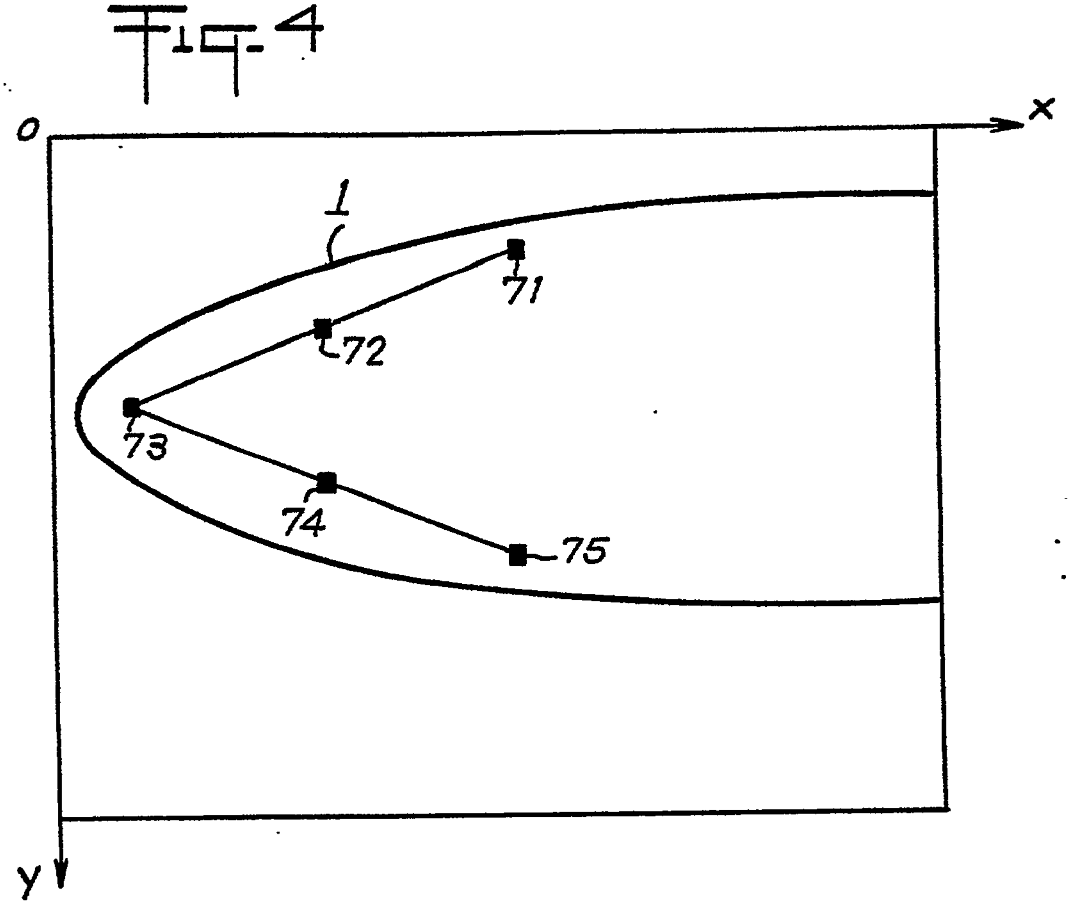


Fig. 5

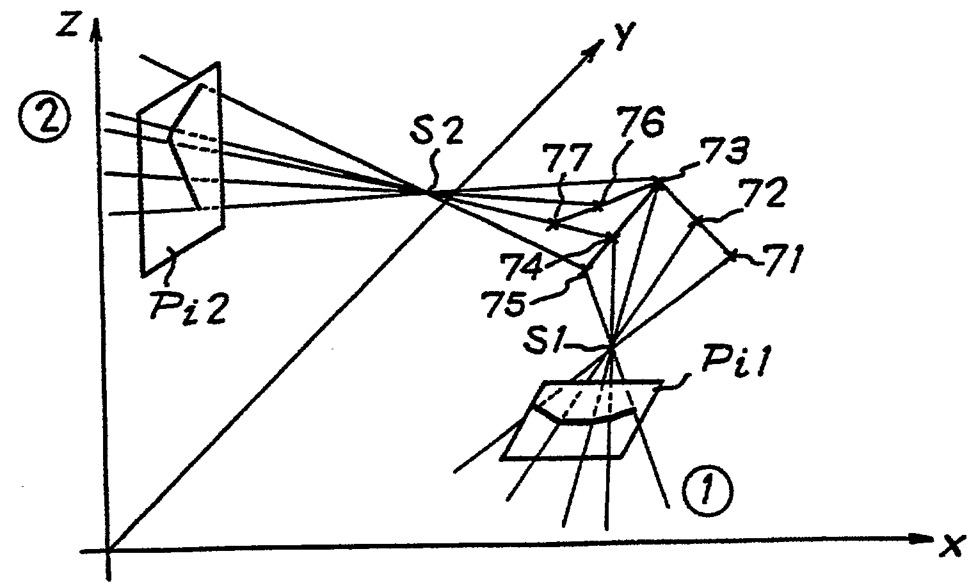

Fig. 6

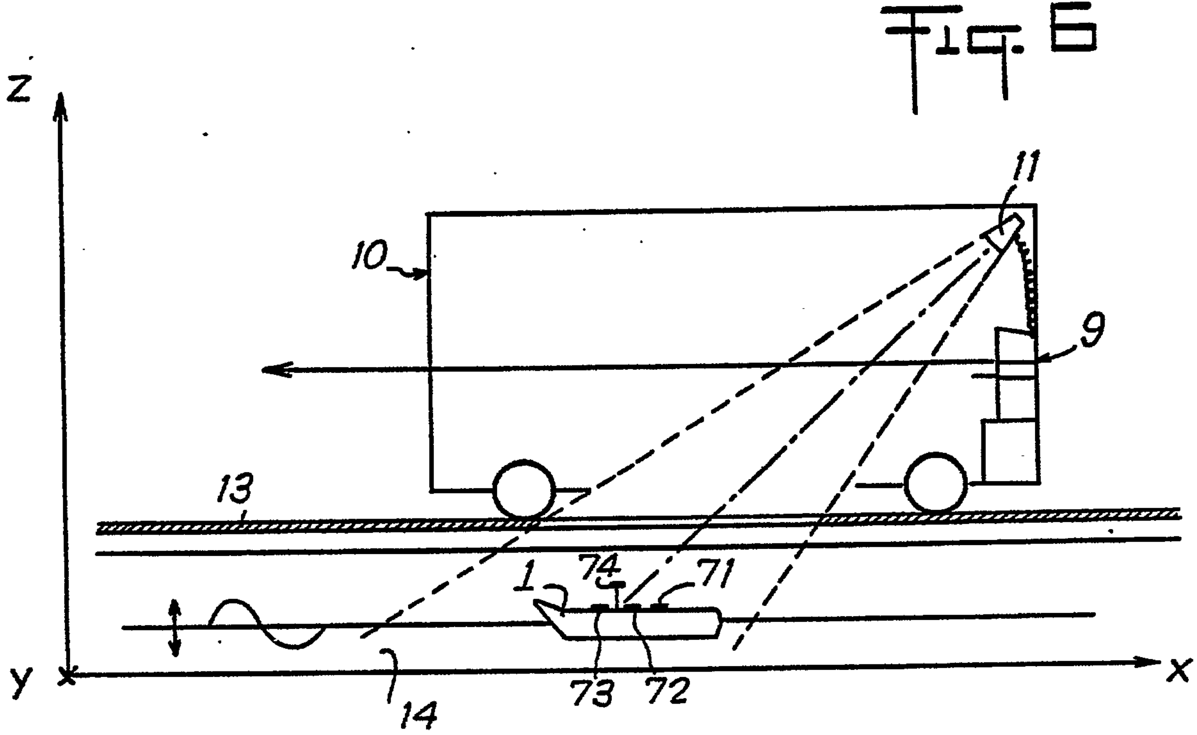


Fig. 7

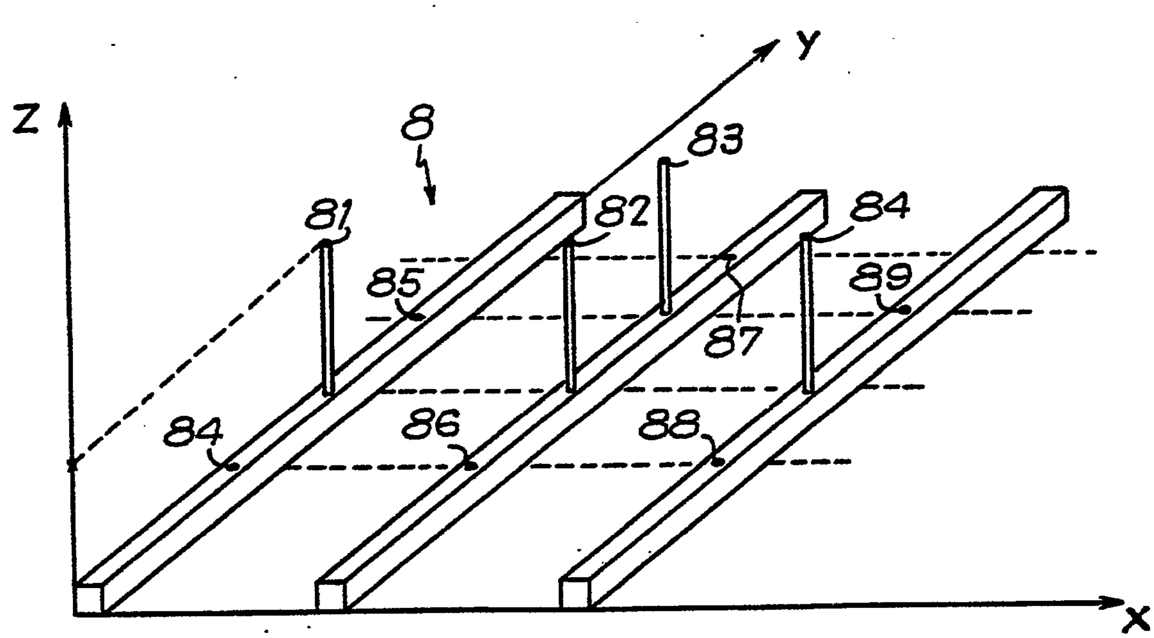

FIG. 8

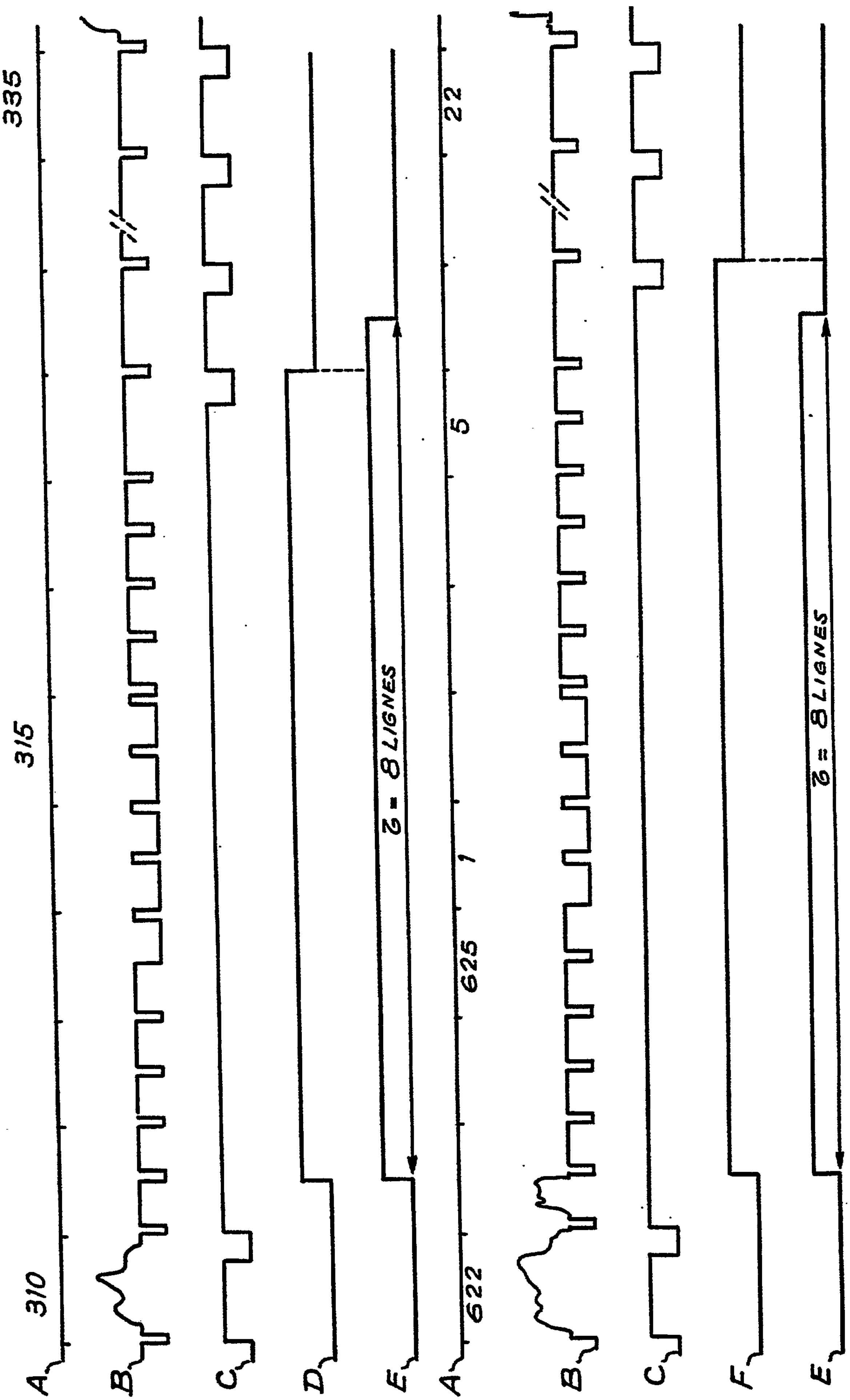

Fig. 9

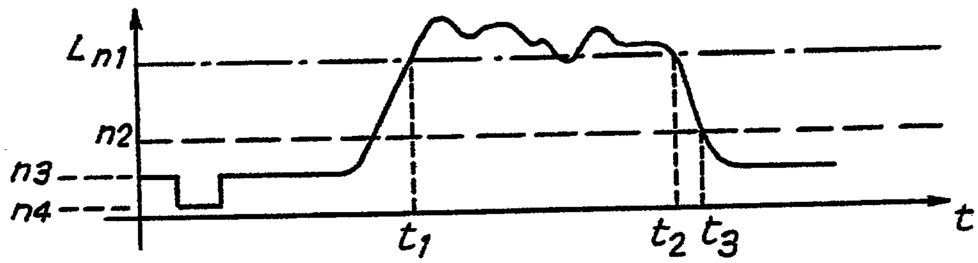


Fig. 13

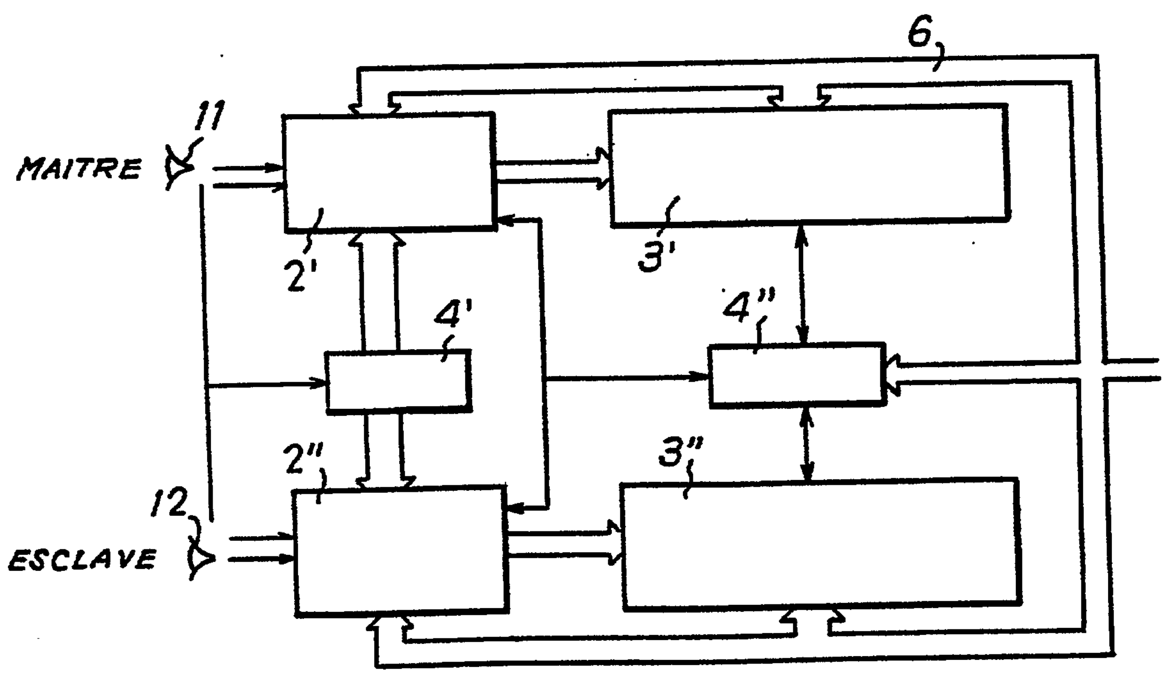

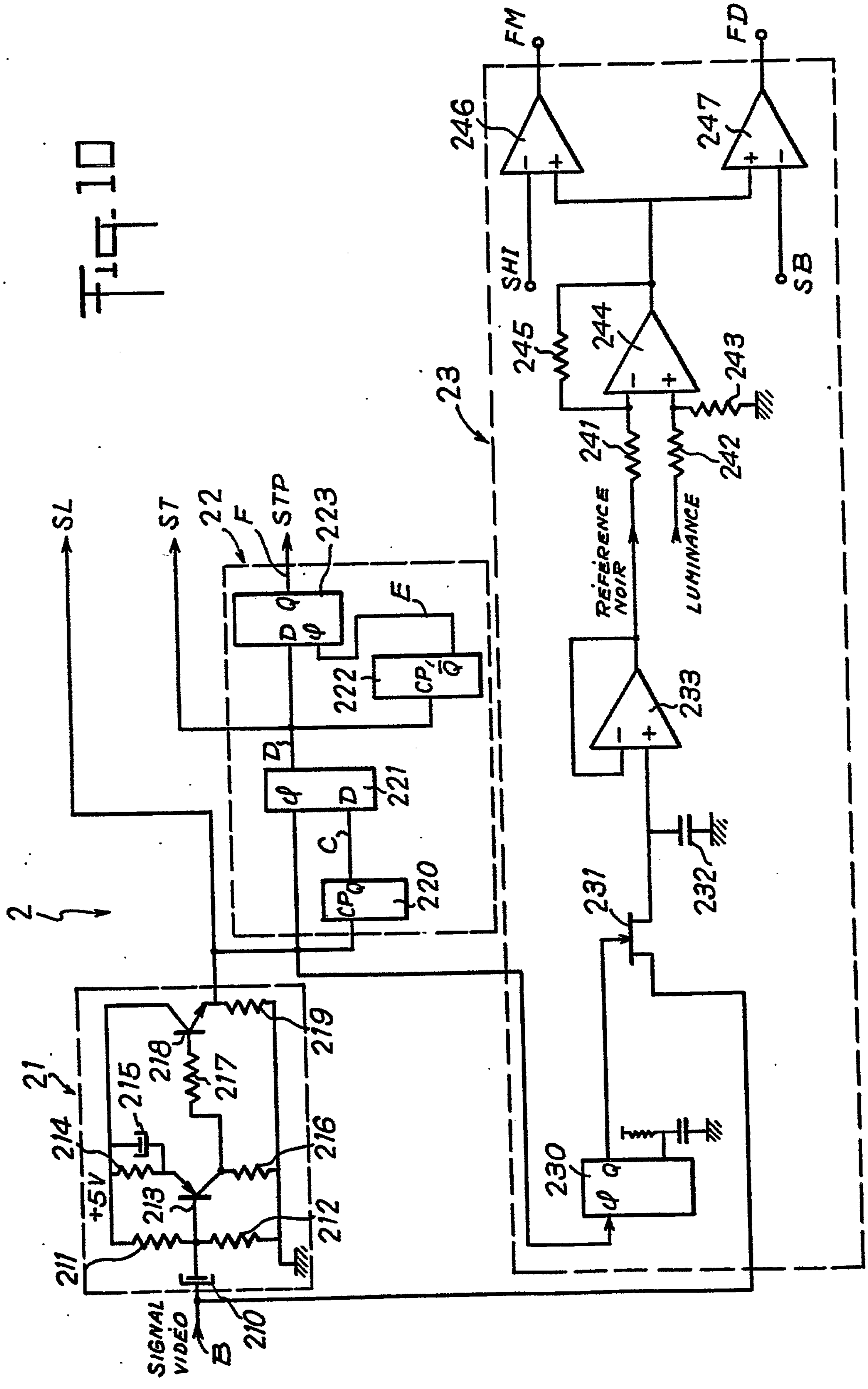
FM
FD
246
247
SHI
SB
245
244
243
241
242
23
RÉFÉRENCE NOIR
LUMINANCE
233
232
231
230
SL
ST
STP
22
F
223
E
222
CP
D
Q
C
221
220
2
21
215
214
+5V
213
218
217
216
212
219
211
210
SIGNAL VIDEO
B

Fig. 10

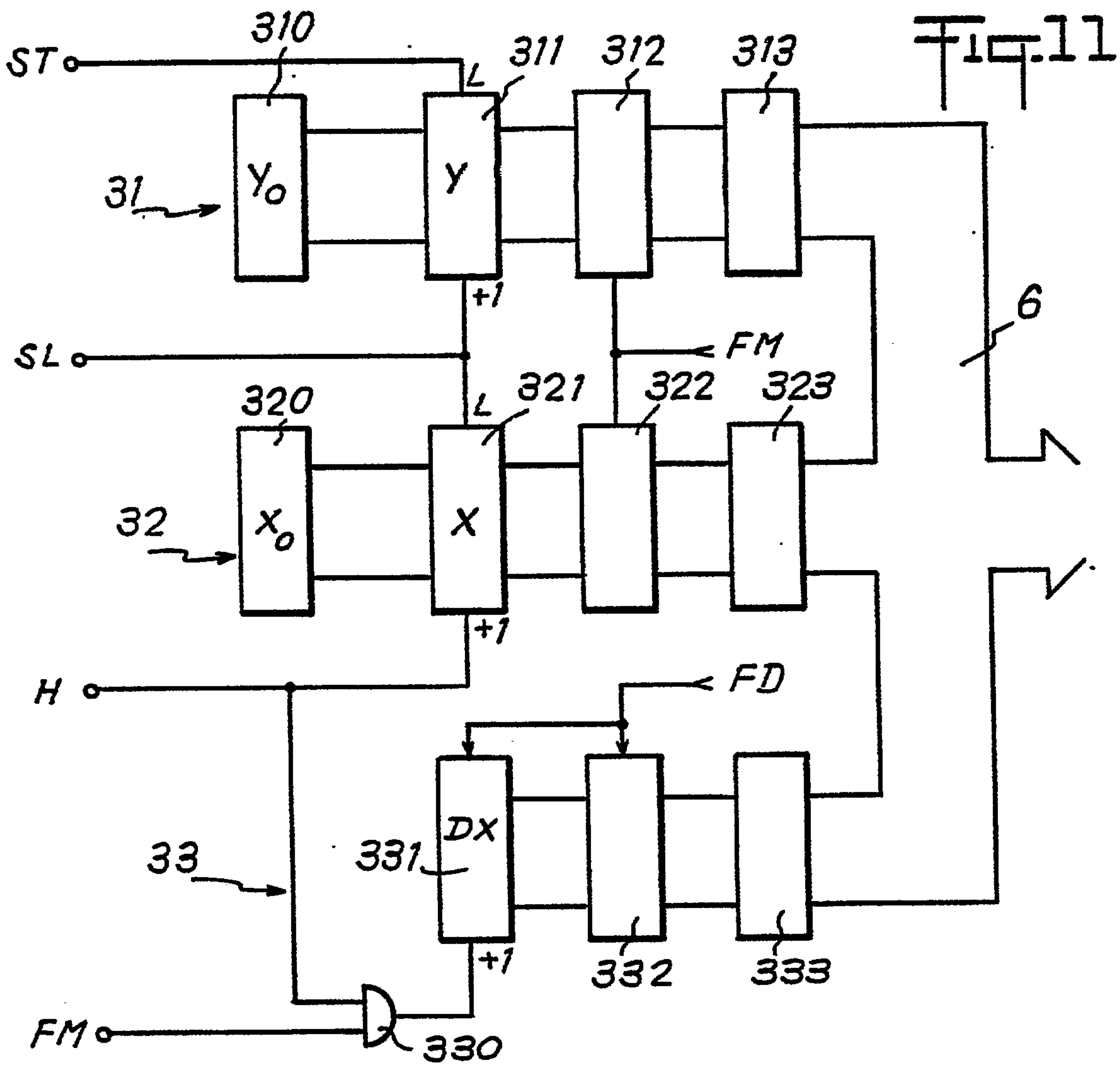
ST
310
311
312
313
L
Y₀
Y
31
+1
SL
FM
6
320
321
322
323
L
32
X₀
X
+1
H
FD
DX
33
331
+1
332
333
FM
330

Fig.11

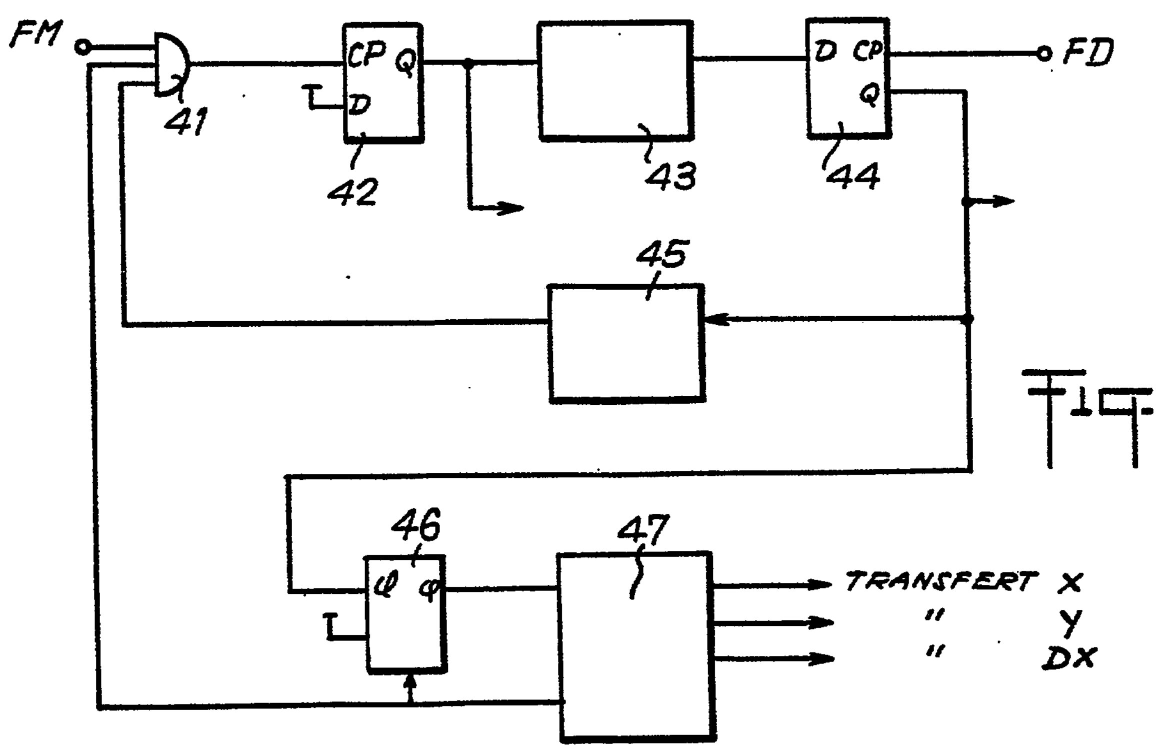
FM
CP Q
D
41
42
43
D CP
Q
44
FD
45
46
47
TRANSFERT X
" Y
" DX

Fig.12

Fig.14

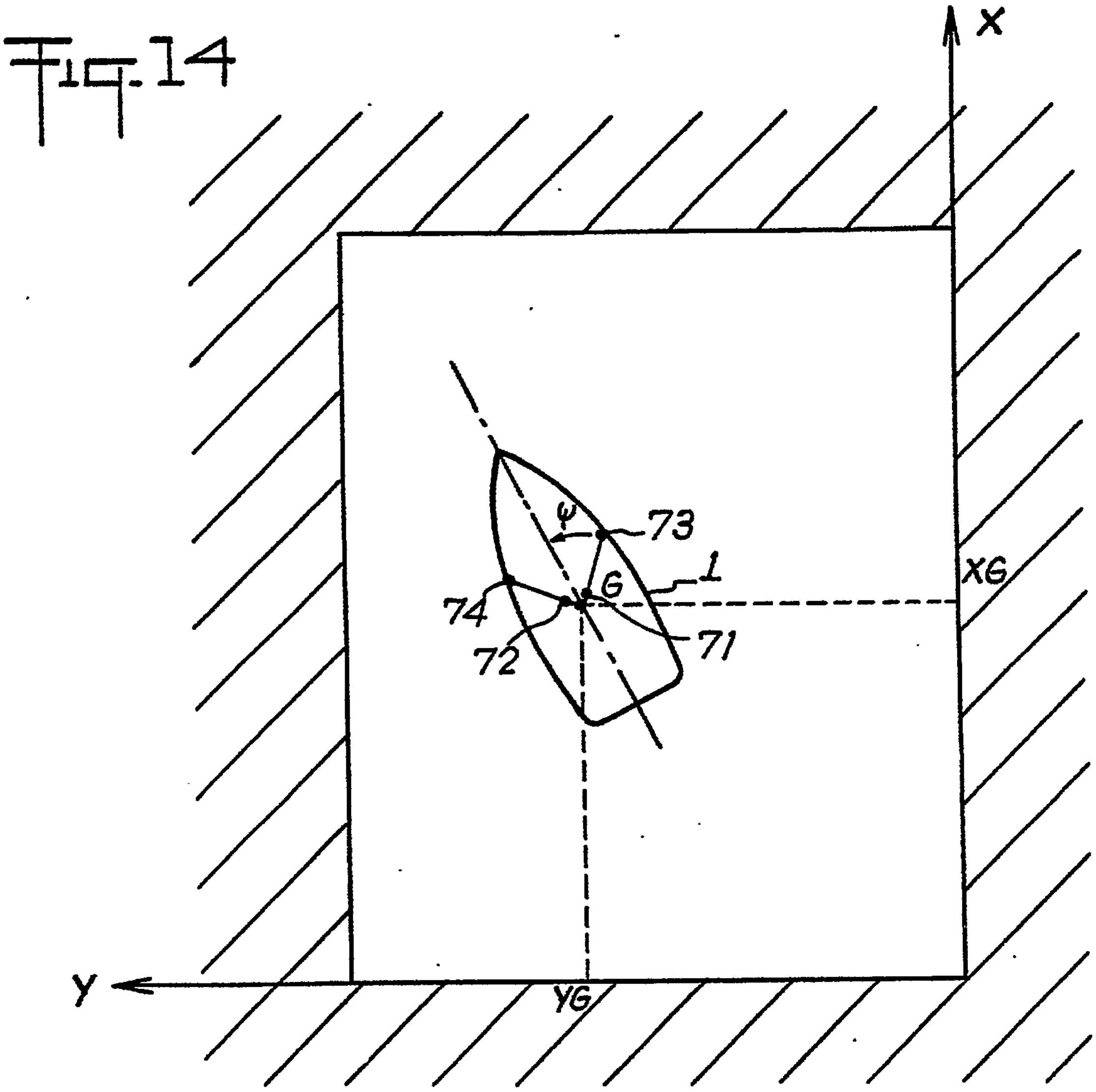


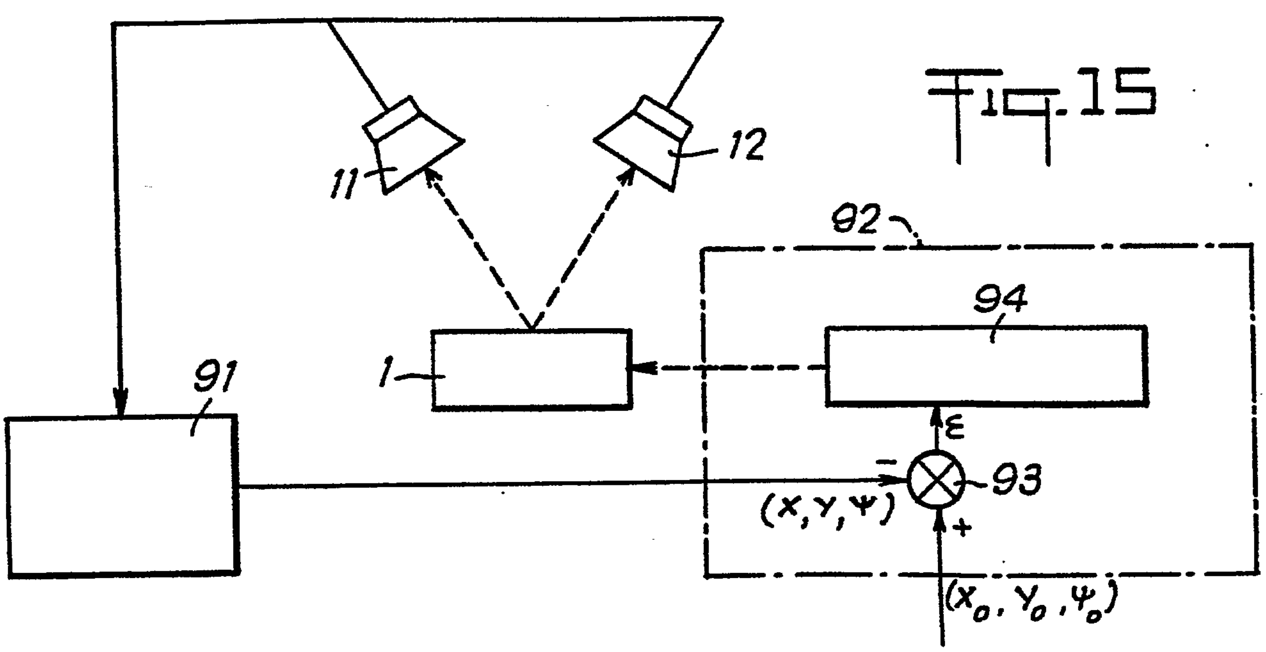


Fig.15